(19) Europäisches Patentamt / European Patent Office / Office européen des brevets

(11) **EP 3 455 277 B1**

(12) **EUROPÄISCHE PATENTSCHRIFT**

(45) Veröffentlichungstag und Bekanntmachung des Hinweises auf die Patenterteilung:
**08.04.2020 Patentblatt 2020/15**

(21) Anmeldenummer: **17721757.7**

(22) Anmeldetag: **11.05.2017**

(51) Int Cl.:
*C08G 65/26* (2006.01)     *C08G 18/32* (2006.01)
*C08G 18/48* (2006.01)

(86) Internationale Anmeldenummer:
**PCT/EP2017/061399**

(87) Internationale Veröffentlichungsnummer:
**WO 2017/194709 (16.11.2017 Gazette 2017/46)**

(54) **VERFAHREN ZUR HERSTELLUNG VON POLYOXYALKYLENPOLYOLEN**

PROCESSES FOR PRODUCING POLYOXYALKYLENE POLYOLS

PROCEDES DE PRODUCTION DE POLYOLS DE POLYOXYALKYLENE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.05.2016 PCT/EP2016/169660**

(43) Veröffentlichungstag der Anmeldung:
**20.03.2019 Patentblatt 2019/12**

(73) Patentinhaber: **Covestro Deutschland AG
51373 Leverkusen (DE)**

(72) Erfinder:
• **LORENZ, Klaus
41539 Dormagen (DE)**
• **DANEK, Ingo
50765 Köln (DE)**

(74) Vertreter: **Levpat
c/o Covestro AG
Gebäude 4825
51365 Leverkusen (DE)**

(56) Entgegenhaltungen:
**WO-A1-03/106534     WO-A1-2012/084762
WO-A1-2012/134849**

**Beschreibung**

Gegenstände der vorliegenden Erfindung sind ein aufarbeitungsfreies Verfahren zur Herstellung von Polyoxyalkylenpolyolen, die durch das aufarbeitungsfreie Verfahren erhältlichen Polyoxyalkylenpolyole sowie die Verwendung der erfindungsgemäßen Polyoxyalkylenpolyole zur Herstellung von Polyurethanen.

Für die Herstellung von Polyurethanen geeignete Polyoxyalkylenpolyole können über verschiedene Herstellverfahren erhalten werden. Von großtechnischer Bedeutung ist zum einen die basisch katalysierte Anlagerung von Alkylenoxiden an H-funktionelle Starterverbindungen, zum anderen die Verwendung von Doppelmetallcyanidverbindungen als Katalysatoren ("DMC-Katalysatoren") für die Anlagerung von Alkylenoxiden an H-funktionelle Starterverbindungen. Die durch (Lewis-) Säuren katalysierte Anlagerung von Alkylenoxiden an geeignete Starterverbindungen ist aufgrund der Neigung zur Bildung unerwünschter Nebenprodukte von untergeordneter Bedeutung.

Von den basischen Katalysatoren kommt den Alkalimetallhydroxiden die größte Bedeutung zu. Sie erlauben die problemlose Herstellung kurzkettiger und/oder hoch ethylenoxidhaltiger Polyoxyalkylenpolyole, der Katalysator im alkalischen Rohpolymerisat muss aber in aller Regel mittels eines separaten Aufarbeitungsschritts entfernt werden. Im Allgemeinen geschieht dies, ggf. nach einem vorgeschalteten Hydrolyseschritt, durch Neutralisation mit einer ausreichend starken Säure, gefolgt von einem Destillationsschritt. Die hierbei ausfallenden Salze müssen üblicherweise durch einen Filtrationsschritt entfernt werden. Destillations- und Filtrationsprozesse sind zeit- und energieintensiv und zudem in manchen Fällen nicht gut reproduzierbar. Es sind daher viele Verfahren entwickelt worden, die ohne Filtrationsschritt und in vielen Fällen auch ohne Destillationsschritt auskommen: Die Neutralisation mit Hydroxycarbonsäuren wie Milchsäure wird in WO 9820061 und US 2004167316 für die Aufarbeitung kurzkettiger Polyole für Hartschaumanwendungen beschrieben, es handelt sich hierbei um weitverbreitete und gut etablierte Verfahren. In US 4521548 wird gezeigt, wie die polymerisationsaktiven Zentren in ähnlicher Weise durch Umsetzung mit Ameisensäure deaktiviert werden können. Die nach Neutralisation mit Hydroxycarbonsäuren bzw. Ameisensäure entstehenden Metallcarboxylate sind in den Polyoxyalkylenpolyolen klar löslich und werden daher normalerweise in den Endprodukten belassen. Nachteilig bei diesen Verfahren ist jedoch die für viele Polyurethananwendungen unerwünschte katalytische Aktivität der in den Produkten verbleibenden Salze der verhältnismäßig schwachen Säuren. In JP-A 10-30023 und US 4110268 werden zur Neutralisation daher aromatische Sulfonsäuren bzw. organische Sulfonsäuren eingesetzt, die ebenfalls in den Polyoxyalkylenpolyolen lösliche Salze bilden, welche aber weniger basisch sind und sich durch geringere katalytische Aktivität auszeichnen. Ein entscheidender Nachteil sind hier die hohen Kosten der Sulfonsäuren. Die Aufarbeitung mittels saurer Kationenaustauscher, wie sie in DE-A 100 24 313 beschrieben ist, erfordert den Einsatz von Lösungsmitteln und deren destillative Abtrennung und ist somit ebenfalls mit hohen Kosten verbunden. Die ebenfalls gelegentlich angewandten Phasentrennverfahren erfordern lediglich einen Hydrolyse-, jedoch keinen Neutralisationsschritt und sind beispielsweise beschrieben in WO 0114456, JP-A 6-157743, WO 9620972 und US 3823145. Mit dem Einsatz von Koalescern oder Zentrifugen wird die Phasentrennung der Polyoxyalkylenpolyole von der alkalischen wässrigen Phase unterstützt, oft müssen auch hier Lösungsmittel zugesetzt werden, um den Dichteunterschied zwischen der Polyoxyalkylenpolyolphase und der Wasserphase zu erhöhen. Solche Verfahren sind nicht für alle Polyoxyalkylenpolyole geeignet, insbesondere versagen sie bei kurzkettigen Polyoxyalkylenpolyolen.

Besitzen die herzustellenden Polyoxyalkylenpolyole besondere strukturelle Eigenschaften, wie beispielsweise einen ausreichend hohen Gehalt an Oxyethyleneinheiten, oder es sind aminogruppenhaltige Starterverbindungen verwendet worden, können durch die Wahl des Verhältnisses von Schwefelsäure zu basischem Katalysator in den Polyoxyalkylenpolyolen lösliche Schwefelsäuresalze erzeugt werden, die in den Produkten verbleiben können und nachfolgende Umsetzungen zum Polyurethanwerkstoff aufgrund ihres neutralen bis leicht sauren Charakters nicht stören. Solche Verfahren sind beschrieben in den Patentschriften EP 2028211 A1 und in WO 2009/152954.

Auch Amine können als Katalysatoren für die Addition von Alkylenoxiden an H-funktionelle Starterverbindungen verwendet werden, wie beispielsweise beschrieben von Ionescu et al. in "Advances in Urethane Science & Technology", 1998, 14, S. 151-218. Über aminische Katalyse können nur Polyoxyalkylenpolyole mit verhältnismäßig niedrigen Äquivalentmolmassen erhalten werden. Die Reste aminischer Katalysatoren sind ebenfalls in den Polyoxyalkylenpolyolen löslich und können in den Produkten verbleiben. Es gilt jedoch auch für sie, dass sie aufgrund ihres basischen Charakters in ggf. unerwünschter Weise Einfluss auf das Reaktionsgeschehen in nachfolgenden Umsetzungsschritten nehmen können.

Unter der Äquivalentmolmasse aktive Wasserstoffatome enthaltender Materialien ist die durch die Zahl der aktiven Wasserstoffatome geteilte Gesamtmasse des aktive Wasserstoffatome enthaltenden Materials zu verstehen. Im Falle von hydroxygruppenhaltigen Materialien (wie beispielsweise Polyoxyalkylenpolyolen) steht sie in folgender Beziehung zur OH-Zahl (Hydroxyl-Zahl):

$$\text{Äquivalentmolmasse} = (56100 \ [\text{mg} / \text{mol}]) / (\text{OH-Zahl} \ [\text{mg KOH/g}]) \qquad (I)$$

Die Ermittlung der Äquivalentmolmasse des Polyoxyalkylenpolyols erfolgt also gemäß Formel (I), wobei die die Hydroxylzahl des Polyoxyalkylenpolyols nach DIN 53240 ermittelt oder spektroskopisch über NIR bestimmt werden kann.

Im Gegensatz zu den bisher erwähnten Katalysatorklassen besitzen DMC-Katalysatoren der jüngsten Generation, wie sie z.B. in US-A 5470813, EP-A 700949, EP-A 743093, EP-A 761708, WO-A 97/40086, WO-A 98/16310 und WO-A 00/47649 beschrieben sind, eine außerordentlich große Aktivität und ermöglichen die Herstellung von Polyoxyalkylenpolyolen mit hohen Äquivalentmolmassen bei sehr geringen Katalysatorkonzentrationen (25 ppm oder weniger), so dass eine Abtrennung des Katalysators aus dem fertigen Produkt nicht mehr erforderlich ist und auch kein Einfluss der aus DMC-Katalysatoren stammenden Überreste auf das Verhalten solchermaßen hergestellter Polyole bei weiteren Umsetzungsschritten zum Polyurethan zu erwarten ist. Ein typisches Beispiel sind die in EP-A 700949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Ein Charakteristikum von DMC-Katalysatoren ist ihre ausgeprägte Empfindlichkeit gegen hohe Konzentrationen an Hydroxygruppen, welche beispielsweise durch große Mengen an Startern wie Ethylenglykol, Propylenglykol, Glycerin, Trimethylolpropan, Sorbitol oder Saccharose hervorgerufen werden, und polare Verunreinigungen des Reaktionsgemisches. Die DMC-Katalysatoren können dann während der Reaktionsinitiierungsphase beispielsweise nicht in die polymerisationsaktive Form überführt werden oder bereits laufende Alkylenoxidadditionsreaktionen können durch die Gegenwart einer hohen Hydroxygruppenkonzentrationen zum Erliegen kommen. Naturgemäß limitiert dies die Verwendbarkeit von DMC-Katalysatoren für die Herstellung kurzkettiger Polyoxyalkylenpolyole mit OH-Zahlen von größer oder gleich 200 mg KOH / g, die beispielsweise bei der Herstellung von Hartschaumstoffen Verwendung finden. Es hat daher nicht an Versuchen gefehlt, die unbestreitbaren Vorteile der DMC-Katalyse auch für die Herstellung kurzkettiger Polyoxyalkylenpolyole nutzbar zu machen.

In WO 2011/075333 A1 wird ein bei hoher Reaktionstemperatur und unter DMC-Katalyse durchzuführendes vollkontinuierliches Produktionsverfahren für Polyoxyalkylenpolyole mit OH-Zahlen bis zu 660 mg KOH / g beschrieben. Der Nachteil solcher kontinuierlicher Prozesse ist ihre mangelnde Flexibilität bei Produktwechseln, darüber hinaus erweist sich die kontinuierliche stabile Dosierung fester Starter, wie beispielsweise Sorbit, Trimethylolpropan, Pentaerythrit oder Zucker als schwierig. Die Dosierung solcher Starter muss über aufwändig beheizte Dosierstrecken oder in Lösung erfolgen. Ein batchweise durchzuführender Prozess für die Herstellung kurzkettiger Polyoxyalkylenpolyole ist Gegenstand der WO 2012/134849: In einem mit sog. "Supersäuren" katalysierten Alkylenoxidadditionsschritt werden zunächst Vorstufen erhalten, welche, ggf. nach Neutralisation der Vorstufe, in einem nachfolgenden zweiten Umsetzungsschritt unter DMC-Katalyse in die Endprodukte, kurzkettige Polyoxyalkylenpolyole mit OH-Zahlen zwischen 140 und 625 mg KOH / g, überführt werden. Der Nachteil dieses Verfahrens liegt in der Verwendung der Supersäuren im ersten Verfahrensschritt, die die Bildung unerwünschter Nebenprodukte, wie beispielsweise von Dioxolanen und Dioxanen, begünstigt. Solche Katalysatoren werden daher in kommerziellen Produktionsverfahren normalerweise nicht eingesetzt und müssten vielerorts erst eingeführt werden. Ein batchweise durchzuführender Prozess wird ebenfalls beschrieben in der WO 2012/091968: Die Überführung des DMC-Katalysators in den aktiven Zustand wird durch den Zusatz von Magnesiumverbindungen oder von Verbindungen von Metallen der 3. - 15. Gruppe des Periodensystems, bzw. von Verbindungen der Lanthaniden erleichtert und seine Aktivität wird erhöht. Nachteilig ist auch hier natürlich der Einsatz zusätzlicher Komponenten, außerdem scheinen sich grundsätzlich nur aus den eigentlichen Starterverbindungen separat durch einen nicht weiter beschriebenen Prozess vorgefertigte Alkylenoxidadditionsprodukte als Ausgangsverbindungen für den DMC-katalysierten Schritt zu eignen. Eine wirksame Maßnahme zur Senkung der Konzentrationen an Hydroxylgruppen in DMC-katalysierten Batchverfahren ist die Zudosierung der niedermolekularen H-funktionellen Starterverbindung(en) parallel zur Dosierung des Alkylenoxids / der Alkylenoxide. Dieses sogenannte Verfahren der kontinuierlichen Starterzudosierung ist in WO-A 97/29146 offenbart. Eine Weiterentwicklung des Verfahrens der Paralleldosierung von niedermolekularer Starterverbindung und Alkylenoxid mit dem Ziel der Herstellung von Polyoxyalkylenpolyolen mit niedrigen Äquivalentmolmassen stellt die Lehre der EP 1577334 dar: Die Empfindlichkeit des DMC-Katalysators gegen hohe Hydroxygruppenkonzentrationen wird durch die Zugabe kleiner Mengen von anorganischen oder organischen Brønsted-Säuren zur eindosierten niedermolekularen Starterverbindung gesenkt. Auch in diesem Verfahren stellt sich die Notwendigkeit ein durch Alkylenoxidaddition vorgefertigtes Starterpolyol im Reaktor vorlegen zu müssen als nachteilig heraus, ebenfalls kann sich die kontinuierliche stabile Dosierung fester Starter, wie beispielsweise Sorbit, Trimethylolpropan oder Zucker als problematisch erweisen. In der US-A 2010/0324340 wurde gefunden, dass sich im Verfahren der kontinuierlichen Starterzudosierung insbesondere ein zu hoher Wassergehalt im Starterstrom als hinderlich bei der Herstellung von Polyoxyalkylenpolyolen mit niedrigen Äquivalentmolmassen erweist. Konsequenterweise offenbart diese Anmeldung ein Verfahren, bei dem aufwändig auf einen möglichst niedrigen Wassergehalt eingestellte niedermolekulare H-funktionelle Starterverbindungen eingesetzt werden.

Aufgabe der vorliegenden Erfindung war es daher, ein effizientes Verfahren zur Herstellung von Polyoxyalkylenpolyolen mit niedrigen Äquivalentmolmassen bereitzustellen, welches die Nachteile der Verfahren des Standes der Technik nicht aufweist. Insbesondere war ein flexibles, batchweise durchführbares Verfahren anzustreben, welches darüber hinaus, falls erforderlich, auch ohne den Einsatz von Ethylenoxid durchführbar ist und natürlich ohne Schritte zur Abtrennung von Katalysatorresten auskommt. Der Einsatz vorgefertigter Alkylenoxidadditionsprodukte als Startmedium und die technisch aufwändige Paralleldosierung von Starterverbindung(en) und Alkylenoxid sollte vermieden werden. Der DMC-katalysierte Schritt des Verfahrens sollte in der Lage sein Zwischenverbindungen mit Äquivalentmolmassen ≤ 94 Da in Polyole mit Äquivalentmolmassen bis zu 280 Da, bevorzugt bis zu 225 Da, besonders bevorzugt bis zu 187 Da überführen, dies bei möglichst niedrigen auf die Gesamtansatzmasse bezogenen DMC-Katalysatorkonzentrationen von bevorzugt ≤ 150 ppm.

Überraschenderweise konnte die Aufgabe gelöst werden durch ein zweistufiges Verfahren zur Herstellung eines Polyoxyalkylenpolyols 1) durch Umsetzung mindestens einer H-funktionellen Starterverbindung mit mindestens einem Alkylenoxid, umfassend folgende Schritte:

i) Bereitstellung einer Komponente A), enthaltend ein Polyoxyalkylenpolyol A1) mit einer berechneten OH-Zahl ($OHZ_{A1}$) von 600 bis 1060 mg KOH / g und ein neutrales oder saures Salz einer anorganischen Brønsted-Säure durch

i-1) Umsetzung einer H-funktionellen Starterverbindung mit einem oder mehreren Alkylenoxiden B1) unter Verwendung eines basischen Katalysators,
i-2) Umsetzung des aus i-1) resultierenden Gemisches mit einer Brønsted-Säure mit einem pKs-Wert < 1,

ii) Anschließende Umsetzung der Komponente A) mit einem oder mehreren Alkylenoxiden B2) in Anwesenheit eines DMC-Katalysators,
wobei

ii-1) die aus Schritt i) resultierende Komponente A) mit einem DMC-Katalysator versetzt wird und bei einer Temperatur $T_S$ von maximal 145 °C gestrippt wird
und
ii-2) das aus ii-1) resultierende Gemisch mit einem oder mehreren Alkylenoxiden B2) zu einem Polyoxyalkylenpolyol 1) umgesetzt wird, wobei der Quotient aus der Reaktionstemperatur $T_R$ und der Alkylenoxiddosierrate $A_R$, definiert als der pro Stunde dosierte prozentuale Anteil der in Schritt ii) zu dosierenden Alkylenoxidmasse,

$$T_R \, / \, A_R < 5{,}9 \; [h * °C \, / \, \%]$$

beträgt und
wobei die OH-Zahl des nach Durchführung von Schritt ii) erhaltenen Polyoxyalkylenpolyols 1) ≥ 200 mg KOH / g beträgt.

Weitere Gegenstände der vorliegenden Erfindung sind Polyoxyalkylenpolyole 1), erhältlich nach dem erfindungsgemäßen Verfahren, die Verwendung dieser Polyoxyalkylenpolyole 1) zur Herstellung von Polyurethanen und Polyurethane enthaltend die erfindungsgemäßen Polyoxyalkylenpolyole 1).
In der WO 2012/084762 wird ein Verfahren für die Herstellung von Polyoxyalkylenpolyolen mit OH-Zahlen von 3 mg KOH/g bis 150 mg KOH/g beansprucht, bei dem als Starter für einen DMC-katalysierten Schritt ebenfalls ein saures Schwefelsäuresalz enthaltende Polyoxyalkylenpolyole eingesetzt werden. Die spezifischen Erfordernisse an die Reaktionsführung bei der Herstellung von Polyolen mit OH-Zahlen ≥ 200 mg KOH / g, insbesondere die Minderung der thermischen Belastung des DMC-Katalysators in Gegenwart hoher Konzentrationen an Hydroxygruppen durch Einhalten der Bedingung $T_R \, / \, A_R < 5{,}9$ (h * °C / %) wurde in der WO 2012/084762 nicht erkannt.
Die berechnete OH-Zahl des Polyoxyalkylenpolyols A1) ($OHZ_{A1}$) wird nach Formel (II) bestimmt:

$$OHZ_{A1} = \text{((Masse der in Schritt i-1) eingesetzten H-funktionellen Starterverbindung) x (OH-Zahl der in Schritt i-1) eingesetzten H-funktionellen Starterverbindung)) / (Masse der in Schritt i-1) eingesetzten H-funktionellen Starterverbindung + Masse des in Schritt i-1) eingesetzten Alkylenoxids B1)} \quad (II)$$

Die $OHZ_{A1}$ beträgt 600 - 1060 mg KOH / g, bevorzugt 700 - 1060 mg KOH / g und besonders bevorzugt 800 - 1060 mg KOH / g.

*i-1)*

In Schritt i-1) können als basische Katalysatoren Alkalimetallhydroxide, Erdalkalimetallhydroxide, Alkalimetallhydride, Erdalkalimetallhydride, Alkalimetallcarboxylate und/oder Erdalkalimetallcarboxylate eingesetzt werden. Alkalimetalle sind ausgewählt aus der Gruppe bestehend aus Li, Na, K, Rb, Cs und die Erdalkalimetalle sind ausgewählt aus der Gruppe bestehend aus Be, Ca, Mg, Sr, Ba.

Alternativ können organische basische Katalysatoren wie beispielsweise Amine eingesetzt werden. Hierunter fallen aliphatische Amine oder Alkanolamine wie N,N-Dimethylbenzylamin, Dimethylaminoethanol, Dimethylaminopropanol, N-Methyldiethanolamin, Trimethylamin, Triethylamin, N,N-Dimethylcyclohexylamin, N-Methylpyrrolidin, N,N,N',N'-Tetramethylethylendiamin, Diazabicyclo [2,2,2] octan, 1,4-Dimethylpiperazin oder N-Methylmorpholin. Ebenfalls gut verwendbar sind auch aromatische Amine wie Imidazol und alkylsubstituierte Imidazolderivate, N,N-Dimethylanilin, 4-(N,N-Dimethyl)aminopyridin sowie anvernetzte Copolymere aus 4-Vinylpyridin oder Vinylimidazol und Divinylbenzol. Eine umfassende Übersicht über geeignete Amine ist von M. Ionescu et al. in "Advances in Urethanes Science and Technology", 1998, 14, 151-218 gegeben worden. Bevorzugte aminische Katalysatoren sind tertiäre aliphatische Amine oder Alkanolamine sowie Imidazol und die erwähnten Imidazol- bzw. Pyridinderivate. Solche aminischen Katalysatoren können in Konzentrationen, bezogen auf die erhaltene Menge an Komponente A), von 200 ppm bis 10000 ppm eingesetzt werden, bevorzugt ist der Konzentrationsbereich von 200 ppm bis 5000 ppm.

Bevorzugte basische Katalysatoren sind die Alkalimetallhydroxide, besonders bevorzugt sind Natriumhydroxid, Kaliumhydroxid und/oder Cäsiumhydroxid und ganz besonders bevorzugt ist Kaliumhydroxid. Ein solcher alkalimetallhaltiger Katalysator kann der H-funktionellen Starterverbindung als wässrige Lösung oder als Feststoff zugeführt werden. Solche anorganischen basischen Katalysatoren können in auf die erhaltene Menge an Komponente A) bezogenen Konzentrationen von beispielsweise 40 ppm bis 2000 ppm, bevorzugt 40 ppm bis 1000 ppm, besonders bevorzugt 40 ppm bis 500 ppm eingesetzt werden. Das Lösungswasser und/oder das bei der Reaktion der aktiven Wasserstoffatome mit dem Katalysator freigesetzte Wasser kann vor Beginn der Dosierung des einen oder mehrerer Alkylenoxide im Vakuum bei einem absoluten Druck von 1 bis 500 mbar bei Temperaturen von 20 bis 200 °C, bevorzugt bei 80 bis 180 °C, entfernt werden. Ggf. können das Lösungswasser und das bei der Reaktion der aktiven Wasserstoffatome mit dem Katalysator freigesetzte Wasser auch in der H-funktionellen Starterverbindung belassen werden.

Als basische Katalysatoren können auch vorgefertigte Alkylenoxid-Additionsprodukte von H-funktionellen Starterverbindungen mit Alkoxylatgehalten von 0,05 bis 50 Äquivalenz-% eingesetzt werden, sogenannte "polymere Alkoxylate". Unter dem Alkoxylatgehalt des Katalysators ist der durch eine Base, üblicherweise ein Alkalimetallhydroxid, durch Deprotonierung entfernte Anteil aktiver Wasserstoffatome an allen ursprünglich im Alkylenoxid-Additionsprodukt des Katalysators vorhanden gewesenen aktiven Wasserstoffatomen zu verstehen. Die Einsatzmenge des polymeren Alkoxylates richtet sich natürlich nach der für die Herstellung der Komponente A) angestrebten Katalysatorkonzentration.

H-funktionelle Starterverbindungen sind solche Verbindungen, die mindestens ein Zerewitinoff-aktives Wasserstoffatom, manchmal auch nur als "aktiver Wasserstoff' bezeichnet, enthalten. Ein an N, O, oder S gebundener Wasserstoff wird als Zerewitinoffaktiver Wasserstoff bezeichnet, wenn er nach einem von Zerewitinoff aufgefundenen Verfahren durch Umsetzung mit Methylmagnesiumjodid Methan liefert. Typische Beispiele für Verbindungen mit Zerewitinoff-aktivem Wasserstoff sind Verbindungen, die Carboxyl-, Hydroxyl-, Amino-, Imino- oder Thiol-Gruppen als funktionelle Gruppen enthalten. Geeignete H-funktionelle Starterverbindungen weisen meist Funktionalitäten von 1 bis 35, bevorzugt von 1 bis 8 auf. Ihre Molmassen betragen von 17 g/mol bis 1200 g/mol. Neben den bevorzugt zu verwendenden hydroxyfunktionellen Startern können auch aminofunktionelle Starter eingesetzt werden. Beispiele für hydroxyfunktionelle Starterverbindungen sind Methanol, Ethanol, 1-Propanol, 2-Propanol, die Isomere des Butanols, Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, Glycerin, Trimethylolpropan, Pentaerythrit, Sorbit, Saccharose, Hydrochinon, Brenzcatechin, Resorcin, 1,3,5-Trihydroxybenzol, sowie methylolgruppenhaltige Kondensate aus Formaldehyd und Phenol oder Harnstoff. Es können auch hochfunktionelle Starterverbindungen auf Basis hydrierter Stärkehydrolyseprodukte eingesetzt werden. Solche sind beispielsweise in EP-A 1525244 beschrieben. Beispiele für geeignete aminogruppenhaltige H-funktionelle Starterverbindungen sind Ammoniak, Ethanolamin, Diethanolamin, Triethanolamin, Isopropanolamin, Diisopropanolamin, Ethylendiamin, Hexamethylendiamin, Anilin, die Isomere des Toluidins, die Isomere des Diaminotoluols, die Isomere des Diaminodiphenylmethans sowie bei der Kondensation von Anilin mit Formaldehyd zu Diaminodiphenylmethan anfallende höherkernige Produkte, ferner methylolgruppenhaltige Kondensate aus Formaldehyd und Melamin sowie Mannichbasen. Außerdem können als Starterverbindungen auch Ringöffnungsprodukte aus cyclischen Carbonsäureanhydriden und Polyolen, die sich nach Zusammengeben der beiden Komponenten sehr rasch in situ bilden, eingesetzt werden. Beispiele sind Ringöffnungsprodukte aus Phthalsäureanhydrid, Bernsteinsäureanhydrid, Maleinsäureanhydrid einerseits und Ethylenglykol, Diethylenglykol, 1,2-Butandiol, 1,3-Butandiol, 1,4-Butandiol, Glycerin, Trimethylolpropan, Pentaerythrit oder Sorbit andererseits. Daneben ist es auch möglich, ein- oder mehrfunktionelle Carbonsäuren direkt als Starterverbindungen einzusetzen.

Ferner können dem Prozess auch vorgefertigte Alkylenoxidadditionsprodukte der erwähnten Starterverbindungen, also Polyoxyalkylenpolyole vorzugsweise mit OH-Zahlen von > 600 bis 1100 mg KOH/g, bevorzugt 700 bis 1000 mg KOH/g, zugesetzt werden. Auch ist es möglich, im erfindungsgemäßen Prozess Polyesterpolyole vorzugsweise mit OH-Zahlen im Bereich von > 600 bis beispielsweise 800 mg KOH/g als (Co-)Starter mit dem Ziel der Polyetheresterherstellung einzusetzen. Hierfür geeignete Polyesterpolyole können beispielsweise aus organischen Dicarbonsäuren und mehrwertigen Alkoholen, vorzugsweise Diolen, nach bekannten Verfahren hergestellt werden.

Des Weiteren können als H-funktionelle Startersubstanzen Polycarbonatpolyole, Polyestercarbonatpolyole oder Polyethercarbonatpolyole, bevorzugt Polycarbonatdiole, Polyestercarbonatdiole oder Polyethercarbonatdiole vorzugsweise jeweils mit OH-Zahlen im Bereich von > 600 bis beispielsweise 800 mg KOH/g, als (Co-)Starter verwendet werden. Diese werden beispielsweise durch Umsetzung von Phosgen, Dimethylcarbonat, Diethylcarbonat oder Diphenylcarbonat mit di- oder höherfunktionellen Alkoholen oder Polyesterpolyolen oder Polyetherpolyolen hergestellt.

Zur Berechnung der $OHZ_{A1}$ gemäß Formel (II) wird bei thiolgruppenhaltigen Starterverbindungen die Zahl der -SH-Gruppen, bei iminogruppenhaltigen Starterverbindungen die Zahl der =NH-Gruppen, bei carboxylgruppenhaltigen Starterverbindungen die Zahl der - COOH-Gruppen und bei aminogruppenhaltigen Starterverbindungen die Zahl der an Aminstickstoffatome gebundenen Wasserstoffatome herangezogen.

Im erfindungsgemäßen Verfahren dienen bevorzugt aminogruppenfreie H-funktionelle Starterverbindungen mit Hydroxygruppen als Träger der aktiven Wasserstoffe wie beispielsweise Methanol, Ethanol, 1-Propanol, 2-Propanol, die Isomere des Butanols, Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, Glycerin, Trimethylolpropan, Pentaerythrit, Sorbit, Saccharose, Hydrochinon, Brenzcatechin, Resorcin, 1,3,5-Trihydroxybenzol, methylolgruppenhaltige Kondensate aus Formaldehyd und Phenol und hydrierte Stärkehydrolyseprodukte. Es können auch Gemische verschiedener H-funktioneller Starterverbindungen eingesetzt werden.

Es ist bevorzugt, dass in Schritt i-1) das Verhältnis [Stoffmenge [mol] basischer Katalysator) / (Stoffmenge [mol] aktive H-Atome der Starterverbindung(en)] mindestens 1 / 8000 beträgt.

Die im Reaktor gemeinsam mit dem basischen Katalysator vorgelegten H-funktionellen Starterverbindungen werden in Schritt i-1) unter Inertgasatmosphäre bei Temperaturen von 80 bis 180 °C, bevorzugt bei 100 bis 170 °C mit einem oder mehreren Alkylenoxiden zur Reaktion gebracht, wobei die Alkylenoxide in der gängigen Weise dem Reaktor kontinuierlich derart zugeführt werden, dass die sicherheitstechnischen Druckgrenzen des verwendeten Reaktorsystems nicht überschritten werden. Insbesondere ist bei der Dosierung von ethylenoxidhaltigen Alkylenoxidgemischen oder reinem Ethylenoxid darauf zu achten, dass ein ausreichender Inertgaspartialdruck im Reaktor während der Anfahr- und Dosierphase aufrechterhalten wird. Dieser kann beispielsweise durch Edelgase oder Stickstoff eingestellt werden. Die Reaktionstemperatur kann während der Alkylenoxiddosierphase natürlich innerhalb der beschriebenen Grenzen variiert werden: Es ist von Vorteil empfindliche H-funktionelle Starterverbindungen, wie beispielsweise Saccharose, zunächst bei niedrigen Reaktionstemperaturen zu alkoxylieren und erst bei hinreichendem Starterumsatz zu höheren Reaktionstemperaturen überzugehen. Die Alkylenoxide können dem Reaktor auf unterschiedliche Weise zugeführt werden: Möglich ist eine Dosierung in die Gasphase oder direkt in die Flüssigphase, z. B. über ein Tauchrohr oder einen in der Nähe des Reaktorbodens in einer gut durchmischten Zone befindlichen Verteilerring. Bei Dosierung in die Flüssigphase sollten die Dosieraggregate selbstleerend ausgelegt sein, beispielsweise durch Anbringen der Dosierbohrungen an der Unterseite des Verteilerrings. Vorteilhafterweise kann durch apparative Maßnahmen, beispielsweise durch die Montage von Rückschlagklappen, ein Rückströmen von Reaktionsmedium in die alkylenoxidführenden Leitungen und Dosieraggregate bzw. in die die Alkylenoxid-Vorratsbehälter verhindert werden. Wird ein Alkylenoxidgemisch dosiert, können die jeweiligen Alkylenoxide dem Reaktor separat oder als Mischung zugeführt werden. Eine Vorvermischung der Alkylenoxide kann beispielsweise durch ein in der gemeinsamen Dosierstrecke befindliches Mischaggregat erreicht werden ("inlineblending"). Es hat sich auch bewährt, Alkylenoxide pumpendruckseitig in einen beispielsweise über Wärmetauscher geführten Umpumpkreislauf einzeln oder vorgemischt zu dosieren. Für die gute Durchmischung mit dem Reaktionsmedium ist es dann von Vorteil ein hochscherendes Mischaggregat in den Alkylenoxid-/Reaktionsmediumstrom zu integrieren. Die Temperatur der exothermen Polymerisation (Alkylenoxidadditionsreaktion) wird durch Kühlung auf dem gewünschten Niveau gehalten bzw. auf das gewünschte Niveau eingestellt. Gemäß dem Stand der Technik zur Auslegung von Polymerisationsreaktoren für exotherme Reaktionen (z.B. Ullmann's Encyclopedia of Industrial Chemistry, Vol. B4, pp 167ff, 5th Ed., 1992) erfolgt eine solche Kühlung im Allgemeinen über die Reaktorwand (z.B. Doppelmantel, Halbrohrschlange) sowie mittels weiterer intern im Reaktor und/oder extern im Umpumpkreislauf angeordneter Wärmetauscherflächen, z.B. an Kühlschlangen, Kühlkerzen, Platten- Rohrbündel- oder Mischerwärmetauschern. Diese sollten so ausgelegt sein, dass auch zu Beginn der Dosierphase, d. h. bei kleinem Füllstand und / oder bei ggf. hoher Viskosität des reagierenden Reaktorinhalts, effektiv gekühlt werden kann.

Generell sollte in allen Reaktionsphasen durch Auslegung und Einsatz handelsüblicher Rührorgane für eine gute Durchmischung des Reaktorinhaltes gesorgt werden, wobei hier insbesondere ein- oder mehrstufig angeordnete Rührer oder großflächig über die Füllhöhe wirkende Rührertypen geeignet sind (siehe z. B. Handbuch Apparate; Vulkan-Verlag Essen, 1. Aufl. (1990), S.188 - 208). Technisch besonders relevant ist hierbei eine im Mittel über den gesamten Reaktorinhalt eingetragene Mischenergie, die im Allgemeinen im Bereich von 0,2 bis 5 W/l liegt, mit entsprechend höheren lokalen Leistungseinträgen im Bereich der Rührorgane selbst und ggf. bei niedrigeren Füllständen. Um eine optimale Rührwirkung zu erzielen, können im Reaktor gemäß allgemeinem Stand der Technik Kombinationen aus Stromstörern (z. B. Flach- oder Rohrstromstörer) und Kühlschlangen (oder Kühlkerzen) angeordnet werden, die sich auch über den Behälterboden erstrecken können. Die Rührleistung des Mischaggregates kann während der Dosierphase auch füllstandsabhängig variiert werden, um in kritischen Reaktionsphasen einen besonders hohen Energieeintrag zu gewährleisten. Beispielsweise kann es vorteilhaft sein, feststoffhaltige Dispersionen, die zu Reaktionsbeginn beispielsweise bei der Verwendung von Saccharose vorliegen können, besonders intensiv zu durchmischen. Außerdem sollte insbesondere beim Einsatz fester H-funktioneller Starterverbindungen durch die Wahl des Rühraggregates sichergestellt werden, dass eine ausreichende Dispergierung des Feststoffes im Reaktionsgemisch gewährleistet ist. Bevorzugt werden hier bodengängige Rührstufen sowie besonders zur Suspendierung geeignete Rührorgane eingesetzt. Ferner sollte die Rührergeometrie zur Minderung des Aufschäumens von Reaktionsprodukten beitragen. Das Aufschäumen von Reaktionsgemischen kann beispielsweise nach Ende der Dosier- und Nachreaktionsphase beobachtet werden, wenn Restalkylenoxide zusätzlich im Vakuum bei absoluten Drücken im Bereich von 1 bis 500 mbar entfernt werden. Für solche Fälle haben sich Rührorgane als geeignet herausgestellt, die eine kontinuierliche Durchmischung der Flüssigkeitsoberfläche erzielen. Je nach Anforderung weist die Rührwelle ein Bodenlager und gegebenenfalls weitere Stützlager im Behälter auf. Der Antrieb der Rührerwelle kann dabei von oben oder unten erfolgen (mit zentrischer oder exzentrischer Anordnung der Welle).

Alternativ ist es auch möglich, die notwendige Durchmischung ausschließlich über einen Wärmetauscher geführten Umpumpkreislauf zu erzielen oder diesen zusätzlich zum Rühraggregat als weitere Mischkomponente zu betreiben, wobei der Reaktorinhalt nach Bedarf (typischerweise 1 bis 50 mal pro Stunde) umgepumpt wird. Die mittels Umpumpung, beispielsweise über einen außenliegenden Wärmetauscher über diesen oder bei Rückführung in den Reaktor über eine Düse oder Injektor, eingetragene spezifische Mischleistung beläuft sich ebenfalls auf Werte von im Mittel 0,2 bis 5 W/L, wobei diese auf das im Reaktor und den Umpumpkreislauf am Ende der Reaktionsphase befindliche Flüssigkeitsvolumen bezogen ist.

Für die Durchführung des erfindungsgemäßen Verfahrens sind die unterschiedlichsten Reaktortypen geeignet. Vorzugsweise werden zylinderförmige Behälter eingesetzt, welche ein Höhen-/Durchmesserverhältnis von 1:1 bis 10:1 besitzen. Als Reaktorböden kommen beispielsweise Kugel-, Klöpper-, Flach,- oder Konusböden in Frage.

Nach Ende der Alkylenoxiddosierphase in Schritt i-1) kann sich eine Nachreaktionsphase anschließen, in der restliches Alkylenoxid abreagiert. Das Ende dieser Nachreaktionsphase ist erreicht, wenn kein weiterer Druckabfall im Reaktionskessel feststellbar ist. Spuren unreagierter Epoxide können nach der Reaktionsphase gegebenenfalls im Vakuum bei einem absoluten Druck von 1 bis 500 mbar entfernt werden. Das alkalische Alkylenoxidadditionsprodukt kann durch Wasser hydrolysiert werden. Dieser Hydrolyseschritt ist jedoch für die Durchführung des erfindungsgemäßen Verfahrens nicht essentiell. Die Wassermenge beträgt hierbei normalerweise bis zu 15 Gew.-%, bezogen auf die Menge des alkalischen Alkylenoxidadditionsproduktes.

Für das erfindungsgemäße Verfahren können verschiedene Alkylenoxide B1) eingesetzt werden. Bevorzugt handelt es sich um eine oder mehrere Verbindungen ausgewählt aus der Gruppe bestehend aus Ethylenoxid, Propylenoxid, 1-Butenoxid, 2,3-Butenoxid und 2-Methyl-1,2-propenoxid (Isobutenoxid).

Im erfindungsgemäßen Verfahren werden in Schritt i-1) als Alkylenoxid B1) besonders bevorzugt Propylenoxid, Ethylenoxid oder ein Gemisch aus Propylenoxid und Ethylenoxid eingesetzt. Werden Gemische aus Ethylenoxid und Propylenoxid eingesetzt, weisen diese bevorzugt bis zu 50 Massen-% Ethylenoxid und besonders bevorzugt bis zu 30 Massen-% Ethylenoxid bezogen auf die Gesamtmasse des Gemisches aus Ethylenoxid und Propylenoxid auf. Ganz besonders bevorzugt wird ausschließlich Propylenoxid eingesetzt. Die Alkylenoxide können dem Reaktor als Einzelkomponenten oder als Gemisch zugeführt werden. Es ist ebenfalls möglich mehrere Alkylenoxide dem Reaktor nacheinander zuzuführen, womit sich Polyoxyalkylenketten mit Blockstruktur realisieren lassen. Bei der Dosierung mehrerer Alkylenoxide ist es möglich die Zusammensetzung des zugeführten Alkylenoxidstroms kontinuierlich oder instantan zu ändern.

i-2)

Die Neutralisation der alkalischen, polymerisationsaktiven Zentren des rohen, gegebenenfalls hydrolysierten Komponente A) aus Schritt i-1) erfolgt erfindungsgemäß in Schritt i-2) durch die Zugabe einer Brønsted-Säure mit einem pKs-Wert < 1, bevorzugt < 0, besonders bevorzugt < -1, wodurch sich das neutrale oder saure Salz dieser Brønsted-Säure durch Reaktion mit den Resten des alkalischen Katalysators bildet. Beispiele für solche Brønsted-Säuren sind $HCLO_4$, $HI$, $HBr$, $HCl$, $H_2SO_4$, $H_2SeO_4$, $HClO_3$, $HNO_3$, $FSO_3H$, $CH_3SO_3H$, $CF_3SO_3H$, $CF_3COOH$, $HPF_6$ und p-Toluolsulfonsäure. Die Säuren können als Reinsubstanz oder als verdünnte wässrige Lösung eingebracht werden. Bevorzugt eingesetzt werden verdünnte wässrige Lösungen der Brønsted-Säuren. Saure Salze werden erhalten, indem mehrbasische Säuren, wie beispielsweise Schwefelsäure oder Selensäure, in höherer Menge als der mindestens zur vollständigen Neutralisation des basischen Katalysators notwendigen Menge eingesetzt werden. Man erhält so nach Neutralisation von KOH oder Ca(OH)$_2$ mit Schwefelsäure beispielsweise KHSO$_4$ und Ca(HSO$_4$)$_2$, ggf. neben K$_2$SO$_4$ und CaSO$_4$. Von den genannten mehrbasischen Säuren wird Schwefelsäure bevorzugt verwendet. Die Menge an eingesetzter Schwefelsäure wird bevorzugt so bemessen, dass von mindestens 66 % nur die erste Dissoziationsstufe bei der Neutralisation des alkalischen Katalysators wirksam wird. Bei der Neutralisation von Kaliumhydroxid bedeutet dies beispielsweise, dass pro mol KOH bevorzugt mindestens 0,75 mol Schwefelsäure verwendet werden. Von den genannten einbasischen Säuren wird Perchlorsäure bevorzugt verwendet.

Die Temperatur kann bei Hydrolyse und Neutralisation in weiten Bereichen variiert werden, Grenzen können hierbei durch die Korrosionsbeständigkeit der Materialien der Neutralisationskessel oder durch den Polyolaufbau gegeben sein. Sind hydrolyseempfindliche Gruppen, wie beispielsweise Estergruppen, in den Produkten zugegen, kann beispielsweise auch bei Raumtemperatur neutralisiert werden. In solchen Fällen empfiehlt es sich außerdem, auf einen vorgeschalteten, separaten Hydrolyseschritt zu verzichten. Ggf. über die Neutralisation mit verdünnten wässrigen Lösungen der Brønsted-Säuren eingebrachte Wasserspuren können bei erhöhter Temperatur im Vakuum bei einem absoluten Druck von 1 bis 500 mbar, ggf. unterstützt durch die Einleitung eines Inertgases in die Flüssigphase, entfernt werden.

Der so erhaltenen Komponente A) können bei Bedarf während oder nach der Neutralisation Alterungsschutzmittel bzw. Antioxidantien zugesetzt werden, beispielsweise, wenn die Komponente A) vor ihrer weiteren Umsetzung zwischengelagert werden soll. Weitere Aufarbeitungsschritte, wie beispielsweise Filtration, sind nicht notwendig. Die Komponente A) weist Äquivalentmolmassen von 53 bis 94 Da auf.

*Schritt ii)*

Der über die Schritte i-1) und i-2) erhaltenen Komponente A) wird in Schritt ii) der DMC-Katalysator zugefügt und mit einem oder mehreren Alkylenoxiden B2) umgesetzt, bis Polyoxyalkylenpolyole 1) mit einer OH-Zahl von > 200 mg KOH/g, bevorzugt von > 250 mg KOH / g und besonders bevorzugt von > 300 mg KOH / g erhalten werden. Der Komponente A) können vor der Zugabe des DMC-Katalysators außerdem zusätzlich geringe Mengen (1 bis 500 ppm) anderer organischer oder anorganischer Säuren zugesetzt werden, wie beispielsweise in WO 99/14258 beschrieben. Die Umsetzung der Komponente A) in Schritt ii) mit einem oder mehreren Alkylenoxiden B1) unter DMC-Katalyse kann prinzipiell im gleichen Reaktor wie die Herstellung der Komponente A) in den Schritten i-1). und i-2). erfolgen. Die auf die Menge an Polyoxyalkylenpolyol 1) berechnete DMC-Katalysatorkonzentration liegt im Bereich von 20 bis 1000 ppm, bevorzugt im Bereich von 30 bis 400 ppm und besonders bevorzugt im Bereich von 30 bis 200 ppm.

Für das erfindungsgemäße Verfahren geeignete DMC-Katalysatoren sind im Prinzip aus dem Stand der Technik bekannt (siehe z.B. US-A 3 404 109, US-A 3829505, US-A 3941849 und US-A 5158922). DMC-Katalysatoren, die z.B. in US-A 5470813, EP-A 700949, EP-A 743093, EP-A 761708, WO 97/40086, WO 98/16310 und WO 00/47649 beschrieben sind, besitzen eine sehr hohe Aktivität in der Polymerisation von Alkylenoxiden und ermöglichen die Herstellung von Polyoxyalkylenpolyolen unter optimalen Bedingungen bei sehr geringen Katalysatorkonzentrationen (100 ppm oder weniger), so dass eine Abtrennung des Katalysators aus dem fertigen Produkt im Allgemeinen nicht mehr erforderlich ist. Ein typisches Beispiel sind die in EP-A 700949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch eine Polyoxyalkylenverbindung mit einem zahlenmittleren Molekulargewicht > als 500 g/mol enthalten. Es ist auch möglich, die in EP Anmeldenummer 10163170.3 offenbarten alkalischen DMC-Katalysatoren einzusetzen.

Zur Herstellung der Doppelmetallcyanid-Verbindungen geeignete cyanidfreie Metallsalze besitzen bevorzugt die allgemeine Formel (III),

$$M(X)_n \qquad (III)$$

wobei

M ausgewählt ist aus den Metallkationen Zn$^{2+}$, Fe$^{2+}$, Ni$^{2+}$, Mn$^{2+}$, Co$^{2+}$, Sr$^{2+}$, Sn$^{2+}$, Pb$^{2+}$ und, Cu$^{2+}$, bevorzugt ist M Zn$^{2+}$, Fe$^{2+}$, Co$^{2+}$ oder Ni$^{2+}$,

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

n ist 1, wenn X = Sulfat, Carbonat oder Oxalat ist und

n ist 2, wenn X = Halogenid, Hydroxid, Cyanat, Thiocyanat, Isocyanat, Isothiocyanat oder Nitrat ist,

oder geeignete cyanidfreie Metallsalze besitzen die allgemeine Formel (IV),

$$M_r(X)_3 \qquad (IV)$$

wobei

M ausgewählt ist aus den Metallkationen $Fe^{3+}$, $Al^{3+}$ und $Cr^{3+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalate ist und
r ist 1, wenn X = Halogenid, Hydroxid, Cyanat, Thiocyanat, Isocyanat, Isothiocyanat, Carboxylat oder Nitrat ist,

oder geeignete cyanidfreie Metallsalze besitzen die allgemeine Formel (V),

$$M(X)_s \qquad (V)$$

wobei

M ausgewählt ist aus den Metallkationen $Mo^{4+}$, $V^{4+}$ und $W^{4+}$

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

s ist 2, wenn X = Sulfat, Carbonat oder Oxalat ist und

s ist 4, wenn X = Halogenid, Hydroxid, Cyanat, Thiocyanat, Isocyanat, Isothiocyanat, Carboxylat oder Nitrat ist,

oder geeignete cyanidfreie Metallsalze besitzen die allgemeine Formel (VI),

$$M(X)_t \qquad (VI)$$

Wobei

M ausgewählt ist aus den Metallkationen $Mo^{6+}$ und $W^{6+}$

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

t ist 3, wenn X = Sulfat, Carbonat oder Oxalat ist und

t ist 6, wenn X = Halogenid, Hydroxid, Cyanat, Thiocyanat, Isocyanat, Isothiocyanat, Carboxylat oder Nitrat ist,

Beispiele geeigneter cyanidfreier Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Cobalt(II)chlorid, Cobalt(II)thiocyanat, Nickel(II)chlorid und Nickel-(II)nitrat. Es können auch Mischungen verschiedener Metallsalze eingesetzt werden. Zur Herstellung der Doppelmetallcyanid-Verbindungen geeignete Metallcyanidsalze besitzen bevorzugt die allgemeine Formel (VII)

$$(Y)_a M'(CN)_b (A)_c \qquad (VII)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),

Y ausgewählt ist aus einem oder mehreren Metallkationen der Gruppe bestehend aus Alkalimetall (d.h. Li$^+$, Na$^+$, K$^+$, Rb$^+$, Cs$^+$) und Erdalkalimetall (d.h. Be$^{2+}$, Ca$^{2+}$, Mg$^{2+}$, Sr$^{2+}$, Ba$^{2+}$),

A ausgewählt ist aus einem oder mehreren Anionen der Gruppe bestehend aus Halogeniden (d..h. Fluorid, Chlorid, Bromid, Iodid), Hydroxid, Sulfat, Carbonat, Cyanat, Thiocyanat, Isocyanat, Isothiocyanat, Carboxylat, Oxalat oder Nitrat und

a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen, die in den erfindungsgemäßen DMC-Katalysatoren enthalten sind, sind Verbindungen der allgemeinen Formel (VIII)

$$M_x[M'_{x'}(CN)_y]_z \qquad (VIII),$$

worin M wie in Formel (III) bis (VI) und

M' wie in Formel (VII) definiert ist, und

x, x', y und z sind ganzzahlig und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US-A 5158922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US-A 5158922 (siehe insbesondere Spalte 6, Zeilen 9 bis 65), US-A 3404109, US-A 3829505, US-A 3941849, EP-A 700949, EP-A 761708, JP-A 4145123, US-A 5470813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol, 2-Methyl-3-buten-2-ol, 2-Methyl-3-butin-2-ol, Ethylenglykol-mono-tert.-butylether und 3-Methyl-3 -oxetan-methanol.

Optional werden bei der Herstellung der erfindungsgemäßen DMC-Katalysatoren eine oder mehrere komplexbildende Komponente(n) aus den Verbindungsklassen der Polyoxyalkylenverbindungen, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester oder ionische oberflächen- bzw. grenzflächenaktiven Verbindungen eingesetzt.

Bevorzugt werden bei der Herstellung der erfindungsgemäßen DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz, (also mindestens ein molares Verhältnis von cyanidfreiem Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, so dass sich eine Suspension bildet, die die Doppelmetallcyanid-Verbindung (z.B. Zinkhexacyanocobaltat), Wasser, überschüssiges cyanidfreies Metallsalz, und den organischen Komplexliganden enthält. Der organische Komplexligand kann dabei in der wässrigen Lösung des cyanidfreien Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des cyanidfreien Metallsalzes und des Metallcyanidsalzes und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante zur Herstellung des Katalysators wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Massen-%, bezogen auf die Gesamtlösung.

Optional wird im dritten Schritt der wässrigen Waschlösung eine oder mehrere weitere komplexbildende Komponente(n), bevorzugt im Bereich zwischen 0,5 und 5 Massen-%, bezogen auf die Gesamtlösung, zugefügt.

Außerdem ist es vorteilhaft, den isolierten Feststoff mehr als einmal zu waschen. Hierzu kann z.B. der erste Waschvorgang wiederholt werden. Bevorzugt ist es aber, für weitere Waschvorgänge nicht wässrige Lösungen zu verwenden, z.B. eine Mischung aus organischem Komplexliganden und weiterer komplexbildender Komponente.

Der isolierte und gegebenenfalls gewaschene Feststoff wird anschließend, gegebenenfalls nach Pulverisierung, bei Temperaturen von im allgemeinen 20 - 100 °C und bei absoluten Drücken von im allgemeinen 0,1 mbar bis Normaldruck (1013 mbar) getrocknet.

Ein bevorzugtes Verfahren zur Isolierung der erfindungsgemäßen DMC-Katalysatoren aus der Suspension durch Filtration, Filterkuchenwäsche und Trocknung wird in WO-A 01/80994 beschrieben.

Der DMC-katalysierte Reaktionsschritt ii) kann generell nach denselben verfahrenstechnischen Prinzipien durchgeführt werden wie die unter basischer Katalyse erfolgte Herstellung der Vorstufe von Komponente A) in Schritt i-1). Auf einige verfahrenstechnische Besonderheiten des DMC-katalysierten Reaktionsschrittes ii) soll im Folgenden eingegangen werden.

In einer bevorzugten Verfahrensweise wird der Reaktorinhalt zunächst bei Temperaturen Ts von 60 bis 145 °C, besonders bevorzugt bei Temperaturen von 90 bis 135 °C, ganz besonders bevorzugt bei Temperaturen von 100 bis 130 °C mit Inertgas (Stickstoff oder ein Edelgas wie beispielsweise Argon) über einen Zeitraum von bevorzugt 10 bis 60 min unter Rühren gestrippt. Hierbei werden flüchtige Bestandteile unter Einleiten von Inertgasen in die Flüssigphase bei gleichzeitig angelegtem Vakuum, bei einem absoluten Druck von 5 bis 500 mbar, entfernt. Die Temperatur kann anschließend auf die Reaktionstemperatur des nachfolgenden Schritts, beispielsweise des Aktivierungs- und / oder Alkylenoxidadditionsschritts eingestellt werden, sofern diese nicht identisch mit der Stripptemperatur ist. Die endgültige Reaktionstemperatur kann aber auch erst in der Anfangsphase der Alkylenoxiddosierung, beispielsweise unter Nutzung der freiwerdenden Reaktionswärme, eingestellt werden.

In einem der eigentlichen Polymerisation (Alkylenoxidaddition) vorgelagerten Verfahrensschritt kann der DMC-Katalysator durch Zugabe von typischerweise 2 bis 20 Massen-% Alkylenoxid, bezogen auf die Menge der in Schritt ii) eingesetzten Komponente A), zunächst separat aktiviert werden. Die Zugabe des mindestens einen Alkylenoxids kann vor, während oder nach dem Aufheizen des Reaktorinhaltes auf die Stripp- bzw. Reaktionstemperatur geschehen; sie erfolgt bevorzugt nach dem Strippen. Nach Unterbrechung der Alkylenoxiddosierung, nachdem typischerweise 2 bis 20 Massen-% des mindestens einen Alkylenoxids, bezogen auf die in Schritt ii) eingesetzte Komponente A) zugegeben worden sind, macht sich die Aktivierung des DMC-Katalysators durch einen beschleunigten Abfall des Reaktordruckes bemerkbar, wodurch der beginnende Alkylenoxidumsatz angezeigt wird. Dem Reaktionsgemisch wird sodann, d. h. nach erfolgter Aktivierung, die verbliebene Teilmenge der insgesamt zur Herstellung des angestrebten Polyoxyalkylenpolyols (1) zuzuführenden Menge des mindestens einen Alkylenoxids B2) zugeführt. In vielen Fällen erfolgt die Katalysatoraktivierung bereits so schnell, dass die Unterbrechung der Alkylenoxiddosierung entfallen und direkt mit der kontinuierlichen Dosierung eines Alkylenoxides oder mehrerer Alkylenoxide B2) begonnen werden kann.

Die in Schritt ii) zu wählende Reaktionstemperatur $T_R$ kann während der Alkylenoxiddosierphase variiert werden. Im Sinne des Anspruchs 1 ist unter $T_R$ das zeitliche Mittel der in der reagierenden Flüssigkeit herrschenden Temperatur während der Alkylenoxiddosierphase zu verstehen. Es kann sich als vorteilhaft herausstellen, die Reaktionstemperatur zu variieren, beispielsweise sie gegen Ende der Alkylenoxiddosierphase anzuheben, um eine Beschleunigung des Alkylenoxidumsatzes in der letzten Phase der Alkylenoxiddosierung und in der Nachreaktionsphase zu erzielen. Üblicherweise bleibt die Reaktionstemperatur $T_R$ während der Alkylenoxiddosierphase konstant. In Schritt ii) werden Reaktionstemperaturen $T_R$ bevorzugt im Bereich von 80 bis 200 °C, besonders bevorzugt aber von 100 bis 160 °C gewählt. Unter Alkylenoxiddosierphase ist (sind) die Phase(n) in Schritt ii) zu verstehen, in der (in denen) Alkylenoxid in den Reaktor dosiert wird. Somit umfasst die Alkylenoxiddosierphase auch einen der eigentlichen Hauptadditionsphase vorgeschalteten Aktivierungsschritt, wie im vorherigen Abschnitt beschrieben. Im Sinne des Anspruchs 1 ist unter der Alkylenoxiddosierrate $A_R$ der während der Alkylenoxiddosierphase im Mittel pro Stunde dosierte prozentuale Anteil der insgesamt in Schritt ii) zu dosierenden Alkylenoxidmasse zu verstehen.

Es ist außerdem bevorzugt, dass das Verhältnis der berechneten OH-Zahl des Polyoxyalkylenpolyols A1) ($OHZ_{A1}$) zur Reaktionstemperatur $T_R$ in Schritt ii) folgender Ungleichung (IX) genügt:

$$OHZ_{A1} / T_R < 6,3 \ [mg \ KOH / (g * °C)] \hspace{3cm} (IX)$$

In Schritt ii) kann das mindestens eine Alkylenoxid B2 dem Reaktor im DMC-katalysierten Reaktionsschritt ebenfalls auf unterschiedliche Weise zugeführt werden: Möglich ist eine Dosierung in die Gasphase oder direkt in die Flüssigphase, z. B. über ein Tauchrohr oder einen in der Nähe des Reaktorbodens in einer gut durchmischten Zone befindlichen Verteilerring. Bei DMC-katalysierten Prozessen ist die Dosierung in die Flüssigphase die bevorzugte Variante.

Nach Ende der Alkylenoxiddosierung oder bei einem Wechsel der Zusammensetzung des dosierten Alkylenoxidgemisches können sich Nachreaktionsphasen anschließen, bzw. Nachreaktionsphasen zwischengeschaltet werden, in denen die Abnahme der Konzentration an unreagiertem Alkylenoxid durch Überwachung des Drucks quantifiziert werden kann. Gegebenenfalls kann das Reaktionsgemisch nach Ende der letzten Nachreaktionsphase von kleinen Mengen an nicht umgesetzten Alkylenoxiden im Vakuum, beispielsweise bei einem absoluten Druck von 1 bis 500 mbar, oder durch Strippen vollständig befreit werden. Durch Strippen werden flüchtige Bestandteile, wie beispielsweise (Rest-)Alkylenoxide, unter Einleiten von Inertgasen und/oder Wasserdampf in die Flüssigphase bei gleichzeitig angelegtem Vakuum (beispielsweise durch Durchleiten von Inertgas bei einem Absolutdruck von 5 bis 500 mbar) entfernt. Das Entfernen flüchtiger Bestandteile, wie beispielsweise nicht umgesetzter Alkylenoxide, entweder im Vakuum oder durch Strippen, erfolgt im Allgemeinen bei Temperaturen von 20 bis 200 °C, bevorzugt bei 50 bis 160 °C und vorzugsweise bei Reaktionstemperatur unter Rühren. Solche Strippvorgänge können auch in sogenannten Strippkolonnen durchgeführt werden, in denen dem Produktstrom ein Inertgas- oder Wasserdampfstrom entgegengeleitet wird. Bevorzugt werden zu diesem Zweck Strippkolonnen mit Füllkörpern oder Einbauten verwendet. Solche Strippvorgänge können auch kontinuierlich durchgeführt werden, indem beispielsweise das nicht gestrippte Material in einem Pufferbehälter gesammelt und aus diesem kontinuierlich der Strippkolonne zugeführt wird. Nach Erreichen von Druckkonstanz in der Nachreaktionsphase und ggf. nach Entfernen flüchtiger Bestandteile durch Vakuum und/oder Strippen kann das Produkt aus dem Reaktor abgelassen werden.

Den nach dem erfindungsgemäßen Verfahren hergestellten Polyoxyalkylenpolyolen können gegebenenfalls Alterungsschutzmittel wie z. B. Antioxidantien zugesetzt werden.

Vorzugsweise verbleibt der DMC-Katalysator im Endprodukt (1), er kann jedoch auch abgetrennt werden, beispielsweise durch Behandlung mit Adsorbentien. Verfahren zur Abtrennung von DMC-Katalysatoren sind beispielsweise beschrieben in US-A 4987271, DE-A 3132258, EP-A 406440, US-A 5391722, US-A 5099075, US-A 4721818, US-A 4877906 und EP-A 385619.

Das in Schritt ii) unter DMC-Katalyse umgesetzte mindestens eine Alkylenoxid B2) weist 2 bis 24 Kohlenstoffatome auf. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyloxysilane wie beispielsweise 3-Glycidyloxypropyltrimethoxysilan, 3 -Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltriisopropoxysilan.

Weitere nach dem erfindungsgemäßen Verfahren mit Alkylenoxiden unter DMC-Katalyse in Schritt ii) copolymerisierbare Monomere sind beispielsweise aliphatische Lactone, aromatische Lactone, Lactide, cyclische Carbonate mit bevorzugt mindestens drei gegebenenfalls substituierten Methylengruppen zwischen den Sauerstoffatomen der Carbonatgruppe, aliphatische cyclische Anhydride, aromatische cyclische Anhydride und Kohlendioxid.

Aliphatische oder aromatische Lactone sind cyclische Verbindungen enthaltend eine Esterbindung im Ring. Bevorzugte Verbindungen sind 4-gliedrige Ringlactone wie ß-Propiolacton, β-Butyrolacton, β-Isovalerolacton, β-Caprolacton, β-Isocaprolacton, β-Methyl-β-valerolacton, 5-gliedrige Ringlactone, wie γ-Butyrolacton, γ-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on, 6-gliedrige Ringlactone, wie δ-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on, 7-gliedrige Ringlactone, wie ε-Caprolacton, 1,5-Dioxepan-2-on, 5-Methyloxepan-2-on, Oxepane-2,7-dion, thiepan-2-on, 5-Chlorooxepan-2-on, (4S)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5S,7S)-5-Methyl-7-(propan-2-yl)oxepan-2-on, 4-Methyl-7-(propan-2-yl)oxepan-2-on, und höhergliedrige Ringlactone, wie (7E)-Oxacycloheptadec-7-en-2-on.

Lactide sind cyclische Verbindungen enthaltend zwei oder mehr Esterbindungen im Ring. Bevorzugte Verbindungen sind Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxan-2,5-dion, 3,6-Di(but-3-en-1-yl)-1,4-dioxan-2,5-dion (jeweils einschließlich optisch aktiver Formen). Besonders bevorzugt ist L-Lactid.

Als cyclische Carbonate werden vorzugsweise Verbindungen mit mindestens drei gegebenenfalls substituierten Methylengruppen zwischen den Sauerstoffatomen der Carbonatgruppe eingesetzt. Bevorzugte Verbindungen sind Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiol¬carbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Carbonate mit weniger als drei gegebenenfalls substituierten Methylengruppen zwischen den Sauerstoffatomen der Carbonatgruppe werden unter den Bedingungen des erfindungsgemäßen Verfahrens nicht oder nur zu einem geringen Anteil in die Polymerkette eingebaut.

Cyclische Anhydride sind cyclische Verbindungen enthaltend eine Anhydridgruppe im Ring. Bevorzugte Verbindungen sind Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Ihre Verwendung wird weiterhin beschrieben in US-A 3538043, US-A 4500704, US-A 5032671, US-A 6646100, EP-A 222453 und WO-A 2008/013731.

Nach dem erfindungsgemäßen Verfahren ist es möglich, die Zusammensetzung des Alkylenoxidgemisches nicht nur innerhalb eines der beiden Reaktionsschritte, sondern auch beim Wechsel vom basisch katalysierten (Schritte i-1) und i-2)) zum DMC-katalysierten Alkylenoxidadditionsschritt (Schritt ii)) zu ändern.

Im erfindungsgemäßen Verfahren werden in Schritt ii) als Alkylenoxid B2) bevorzugt Ethylenoxid, Propylenoxid oder ein Gemisch aus Ethylenoxid und Propylenoxid eingesetzt. Werden Gemische aus Ethylenoxid und Propylenoxid eingesetzt, weisen diese bevorzugt bis zu 50 Massen-% Ethylenoxid und besonders bevorzugt bis zu 30 Massen-% Ethylenoxid, bezogen auf die Gesamtmasse des Gemisches aus Ethylenoxid und Propylenoxid, auf. Ganz besonders bevorzugt wird ausschließlich Propylenoxid eingesetzt. Werden während des DMC-katalysierten Alkylenoxidadditionschrittes ii) verschiedene Alkylenoxide B2) verwendet, so können diese wiederum entweder als Mischung oder nacheinander zudosiert werden. Bei letzterer Dosierweise erhalten die unter DMC-Katalyse weiterwachsenden Polyoxyalkylenketten Blockstrukturen. Oft werden als Endblock reines Ethylenoxid oder Mischungen aus Propylenoxid und Ethylenoxid mit einem hohen Ethylenoxidanteil zudosiert, so dass die hergestellten Polyoxyalkylenpolyole 40 bis 100 % primäre OH-Endgruppen aufweisen.

Bei der Dosierung mehrerer Alkylenoxide ist es möglich die Zusammensetzung des zugeführten Alkylenoxidstroms kontinuierlich oder instantan zu ändern.

In einer weiteren Ausführungsform des erfindungsgemäßen Verfahrens ist die Molmasse des Polyoxyalkylenpolyols 1), welches in Schritt ii) erhalten wird, mindestens 44 g/mol, bevorzugt, mindestens 58 g/mol und ganz bevorzugt mindestens 88 g/mol höher ist als die Molmasse des Polyoxyalkylenpolyols A1), welches in Schritt i) erhalten wird.

Die Polyoxyalkylenpolyole 1) können allein oder gegebenenfalls im Gemisch mit weiteren isocyanatreaktiven Komponenten mit organischen Polyisocyanaten, gegebenenfalls in Gegenwart von Treibmitteln, in Gegenwart von Katalysatoren und gegebenenfalls mit weiteren Zusatzstoffen wie z.B. Zellstabilisatoren zur Reaktion gebracht werden und so als Komponenten von massiven oder geschäumten Polyurethanen, insbesondere Polyurethan-Weichschaum wie beispielsweise Polyurethan-Weichblockschaum und Polyurethan-Weichformschaum, dienen.

Polyurethane, bevorzugt massive oder geschäumte Polyurethane, insbesondere Polyurethan-Weichschäume wie beispielsweise Polyurethan-Weichblockschäume und Polyurethan-Weichformschäume, enthaltend die erfindungsgemäßen Polyoxyalkylenpolyole 1) sind ebenfalls Gegenstand der Erfindung.

## Beispiele

### Allgemeines:

Drücke sind grundsätzlich als Absolutdrücke zu verstehen. Prozentangaben verstehen sich, sofern nicht anders angegeben, als Gewichtsprozente.

### Methoden:

OH-Zahl und Viskosität

Die Bestimmung der OH-Zahlen erfolgte gemäß der Vorschrift der DIN 53240. Die Viskositäten wurden mittels Rotationsviskosimeter (Physica MCR 51, Hersteller: Anton Paar) nach der Vorschrift der DIN 53018 ermittelt.

Bestimmung des Kaliumgehaltes

Die Bestimmung des Kaliumgehaltes erfolgte über optische Emissionsspektrometrie (ICP-OES).

Bestimmung der Reaktinstemperatur $T_R$

Die Reaktionstemperatur $T_R$ wurde mittels eines im Bodenbereich des verwendeten Reaktors befindlichen Thermoelementes bestimmt. Unter Reaktionstemperatur $T_R$ ist die Temperatur der reagierenden Flüssigkeit zu verstehen.

### Eingesetzte Rohstoffe

Katalysator für die Alkylenoxidaddition (DMC-Katalysator):

Doppelmetallcyanid-Katalysator, enthaltend Zinkhexacyanocobaltat, tert.-Butanol und Polypropylenglykol mit einem zahlenmittleren Molekulargewicht von 1000 g/mol; beschrieben in WO-A 01/80994, Beispiel 6.

IRGANOX® 1076:

Octadecyl-3-(3,5-di-tert.butyl-4-hydroxyphenyl)propionat. (BASF SE)

### Beispiel 1

In einen 2 l Laborautoklaven wurden unter Stickstoffatmosphäre 382,8 g Trimethylolpropan (TMP) und 0,204 g einer 44,81 %igen Lösung von KOH in Wasser gegeben. Der Autoklav wurde verschlossen und der Druck wurde unter Rühren (Kreuzbalkenrührer, 800 U/min) auf ca. 100 mbar abgesenkt. Während des Aufheizens auf die Reaktionstemperatur von 150 °C erhöhte sich der Druck auf 320 mbar. Bei 150 °C wurden über einen Zeitraum von 2,7 h und bei einer Rührerdrehzahl von 800 U/min 267,3 g Propylenoxid in den Autoklaven dosiert. Nach einer Nachreaktionszeit von 2,0 h wurde der Reaktorinhalt noch über einen Zeitraum von 30 min. bei 150 °C im Vakuum bei einem Druck von 10 mbar ausgeheizt. Die rechnerische OH-Zahl dieses Polyoxyalkylenpolyols A1 betrug 739 mg KOH / g. Der Reaktorinhalt wurde auf 80 °C abgekühlt und es wurden 1,315 g einer 12,33 %igen wässrigen Schwefelsäurelösung zugegeben. Nach einer Verrührzeit von 1 h bei 80 °C ließ man den Reaktorinhalt auf Raumtemperatur abkühlen.

Es wurden 0,063 g DMC-Katalysator zugegeben und der Inhalt des Autoklaven wurde 30 min. bei 130 °C mit 200 U/min. im Vakuum bei einem Druck von 100 bis 120 mbar unter Einleiten von 50 ml Stickstoff pro Minute über einen unter dem Flüssigkeitsspiegel liegenden Verteilerring gestrippt. Es wurden sodann, ebenfalls bei 130 °C aber Rühren mit 800 U/min., 550,1 g Propylenoxid über einen Zeitraum von 3,96 h in den Gasraum des Autoklaven eindosiert. Der Start der Propylenoxiddosierung erfolgte bei einem Druck von 0,05 bar. Nach einer Nachreaktionszeit von 0,42 h wurde 0,5 h bei 130 °C bei einem absoluten Druck von 1 mbar ausgeheizt, danach auf 80 °C abgekühlt und 0,612 g IRGANOX® 1076 zugegeben. Die OH-Zahl des Produktes betrug 391 mg KOH/g und die Viskosität bei 25 °C 777 mPas. Weitere relevante Daten sind in Tabelle 1 angegeben.

**Beispiel 2**

In einen 2 l Laborautoklaven wurden unter Stickstoffatmosphäre 333,0 g Glycerin und 0,230 g einer 46,44 %igen Lösung von KOH in Wasser gegeben. Der Autoklav wurde verschlossen und der Druck wurde unter Rühren (Kreuzbalkenrührer, 800 U/min) auf ca. 50 mbar abgesenkt. Während des Aufheizens auf die Reaktionstemperatur von 150 °C erhöhte sich der Druck auf 130 mbar. Bei 150 °C wurden über einen Zeitraum von 6,83 h und bei einer Rührerdrehzahl von 800 U/min 675,4 g Propylenoxid in den Autoklaven dosiert. Nach einer Nachreaktionszeit von 7,0 h wurde der Reaktorinhalt noch über einen Zeitraum von 30 min. bei 150 °C im Vakuum bei einem Druck von 10 mbar ausgeheizt. Die rechnerische OH-Zahl dieses Polyoxyalkylenpolyols A1 betrug 600 mg KOH / g. Der Reaktorinhalt wurde auf 80 °C abgekühlt und es wurden 1,566 g einer 12,05 %igen wässrigen Schwefelsäurelösung zugegeben. Nach einer Verrührzeit von 1 h bei 80 °C ließ man den Reaktorinhalt auf Raumtemperatur abkühlen.

Es wurden 0,078 g DMC-Katalysator zugegeben und der Inhalt des Autoklaven wurde 30 min. bei 130 °C mit 200 U/min. im Vakuum bei einem Druck von ca. 180 mbar unter Einleiten von 50 ml Stickstoff pro Minute über einen unter dem Flüssigkeitsspiegel liegenden Verteilerring gestrippt. Es wurden sodann, ebenfalls bei 130 °C aber Rühren mit 800 U/min., 513,5 g Propylenoxid über einen Zeitraum von 2,16 h in den Gasraum des Autoklaven eindosiert. Der Start der Propylenoxiddosierung erfolgte bei einem Druck von 0,05 bar. Nach einer Nachreaktionszeit von 0,38 h wurde 0,5 h bei 130 °C bei einem absoluten Druck von 1 mbar ausgeheizt, danach auf 80 °C abgekühlt und 0,747 g IRGANOX® 1076 zugegeben. Die OH-Zahl des Produktes betrug 392 mg KOH/g und die Viskosität bei 25 °C 381 mPas. Weitere relevante Daten sind in Tabelle 1 angegeben.

**Beispiel 3**

In einen 2 l Laborautoklaven wurden unter Stickstoffatmosphäre 290,7 g einer 70 %igen Lösung von Sorbit in Wasser, 87,7 g Glycerin und 0,265 g einer 46,72 %igen Lösung von KOH in Wasser gegeben. Der Autoklav wurde verschlossen, die Temperatur wurde unter Rühren (Kreuzbalkenrührer, 800 U/min) auf 115 °C erhöht und der Druck wurde auf ca. 50 mbar abgesenkt. Nach 15 min. wurde bei weiter laufender Vakuumpumpe begonnen 50 ml Stickstoff pro Minute über einen unter dem Flüssigkeitsspiegel liegenden Verteilerring einzuleiten, wodurch sich der Druck auf ca. 200 mbar erhöhte. Nach 3 h wurde die Stickstoffeinleitung gestoppt und nach kurzer Vakuumphase auf Reaktionstemperatur (150 °C) aufgeheizt. Hierbei wurde ein Druck von 80 mbar erreicht. Bei 150 °C wurden über einen Zeitraum von 6,03 h und bei einer Rührerdrehzahl von 800 U/min 602,8 g Propylenoxid in den Autoklaven dosiert. Nach einer Nachreaktionszeit von 7,0 h wurde der Reaktorinhalt noch über einen Zeitraum von 30 min. bei 150 °C im Vakuum bei einem Druck von 10 mbar ausgeheizt. Die rechnerische OH-Zahl dieses Polyoxyalkylenpolyols A1 betrug 600 mg KOH / g. Der Reaktorinhalt wurde auf 80 °C abgekühlt und es wurden 1,863 g einer 11,83 %igen wässrigen Schwefelsäurelösung zugegeben. Nach einer Verrührzeit von 1 h bei 80 °C ließ man den Reaktorinhalt auf Raumtemperatur abkühlen.

Es wurden 0,123 g DMC-Katalysator zugegeben und der Inhalt des Autoklaven wurde 30 min. bei 130 °C mit 200 U/min. im Vakuum bei einem Druck von ca. 190 mbar unter Einleiten von 50 ml Stickstoff pro Minute über den unter dem Flüssigkeitsspiegel liegenden Verteilerring gestrippt. Es wurden sodann, ebenfalls bei 130 °C aber Rühren mit 800 U/min., 301,6 g Propylenoxid über einen Zeitraum von 3 h in den Gasraum des Autoklaven eindosiert. Der Start der Propylenoxiddosierung erfolgte bei einem Druck von 0,05 bar. Nach einer Nachreaktionszeit von 0,33 h wurde 0,5 h bei 130 °C bei einem absoluten Druck von 1 mbar ausgeheizt, danach auf 80 °C abgekühlt und 0,608 g IRGANOX® 1076 zugegeben. Die OH-Zahl des Produktes betrug 425 mg KOH/g und die Viskosität bei 25 °C 5155 mPas. Weitere relevante Daten sind in Tabelle 1 angegeben.

**Beispiel 4**

In einen 2 l Laborautoklaven wurden unter Stickstoffatmosphäre 382,7 g TMP und 0,191 g einer 46,44 %igen Lösung von KOH in Wasser gegeben. Der Autoklav wurde verschlossen und der Druck wurde unter Rühren (Kreuzbalkenrührer, 800 U/min) auf ca. 100 mbar abgesenkt. Während des Aufheizens auf die Reaktionstemperatur von 150 °C erhöhte sich der Druck auf 180 mbar. Bei 150 °C wurden über einen Zeitraum von 4,2 h und bei einer Rührerdrehzahl von 800 U/min 417,3 g Propylenoxid in den Autoklaven dosiert. Nach einer Nachreaktionszeit von 6,5 h wurde der Reaktorinhalt noch über einen Zeitraum von 30 min. bei 150 °C im Vakuum bei einem Druck von 10 mbar ausgeheizt. Die rechnerische OH-Zahl dieses Polyoxyalkylenpolyols A1 betrug 600 mg KOH / g. Der Reaktorinhalt wurde auf 80 °C abgekühlt und es wurden 1,287 g einer 12,14 %igen wässrigen Schwefelsäurelösung zugegeben. Nach einer Verrührzeit von 1 h bei 90 °C ließ man den Reaktorinhalt auf Raumtemperatur abkühlen.

Es wurden 0,066 g DMC-Katalysator zugegeben und der Inhalt des Autoklaven wurde 30 min. bei 130 °C mit 200 U/min. im Vakuum bei einem Druck von 100 bis 130 mbar unter Einleiten von 50 ml Stickstoff pro Minute über einen unter dem Flüssigkeitsspiegel liegenden Verteilerring gestrippt. Es wurden sodann, ebenfalls bei 130 °C aber Rühren mit 800 U/min., 400,0 g Propylenoxid über einen Zeitraum von 2,07 h in den Gasraum des Autoklaven eindosiert. Der Start der Propylenoxiddosierung erfolgte bei einem Druck von 0,04 bar. Nach einer Nachreaktionszeit von 0,33 h wurde 0,5 h bei 130 °C bei einem absoluten Druck von 1 mbar ausgeheizt, danach auf 80 °C abgekühlt und 0,603 g IRGANOX® 1076 zugegeben. Die OH-Zahl des Produktes betrug 391 mg KOH/g und die Viskosität bei 25 °C 756 mPas. Weitere relevante Daten sind in Tabelle 1 angegeben.

**Beispiel 5**

In einen 2 l Laborautoklaven wurden unter Stickstoffatmosphäre 382,7 g TMP und 0,181 g einer 44,81 %igen Lösung von KOH in Wasser gegeben. Der Autoklav wurde verschlossen und der Druck wurde unter Rühren (Kreuzbalkenrührer, 800 U/min) auf ca. 70 mbar abgesenkt. Während des Aufheizens auf die Reaktionstemperatur von 150 °C erhöhte sich der Druck auf 100 mbar. Bei 150 °C wurden über einen Zeitraum von 1,02 h und bei einer Rührerdrehzahl von 800 U/min 189,1 g Propylenoxid in den Autoklaven dosiert. Nach einer Nachreaktionszeit von 3,0 h wurde der Reaktorinhalt noch über einen Zeitraum von 30 min. bei 150 °C im Vakuum bei einem Druck von 10 mbar ausgeheizt. Die rechnerische OH-Zahl dieses Polyoxyalkylenpolyols A1 betrug 840 mg KOH / g. Der Reaktorinhalt wurde auf 80 °C abgekühlt und es wurden 1,206 g einer 12,07 %igen wässrigen Schwefelsäurelösung zugegeben. Nach einer Verrührzeit von 1 h bei 80 °C ließ man den Reaktorinhalt auf Raumtemperatur abkühlen.

Es wurden 0,064 g DMC-Katalysator zugegeben und der Inhalt des Autoklaven wurde 30 min. bei 130 °C mit 200 U/min. im Vakuum bei einem Druck von 190 mbar unter Einleiten von 50 ml Stickstoff pro Minute über einen unter dem Flüssigkeitsspiegel liegenden Verteilerring gestrippt. Es wurde sodann auf 140 °C erwärmt, bei dieser Temperatur und Rühren mit 800 U/min. wurden 628,3 g Propylenoxid über einen Zeitraum von 4,02 h in den Gasraum des Autoklaven eindosiert. Der Start der Propylenoxiddosierung erfolgte bei einem Druck von 0,05 bar. Nach einer Nachreaktionszeit von 0,88 h wurde 0,5 h bei 140 °C bei einem absoluten Druck von 1 mbar ausgeheizt, danach auf 80 °C abgekühlt und 0,601 g IRGANOX® 1076 zugegeben. Die OH-Zahl des Produktes betrug 393 mg KOH/g und die Viskosität bei 25 °C 767 mPas. Weitere relevante Daten sind in Tabelle 1 angegeben.

**Beispiel 6**

In einen 2 l Laborautoklaven wurden unter Stickstoffatmosphäre 383,2 g TMP und 0,194 g einer 44,81 %igen Lösung von KOH in Wasser gegeben. Der Autoklav wurde verschlossen und der Druck wurde unter Rühren (Kreuzbalkenrührer, 800 U/min) auf ca. 60 mbar abgesenkt. Während des Aufheizens auf die Reaktionstemperatur von 150 °C erhöhte sich der Druck auf 110 mbar. Bei 150 °C wurden über einen Zeitraum von 1,02 h und bei einer Rührerdrehzahl von 800 U/min 189,1 g Propylenoxid in den Autoklaven dosiert. Nach einer Nachreaktionszeit von 3,32 h wurde der Reaktorinhalt noch über einen Zeitraum von 30 min. bei 150 °C im Vakuum bei einem Druck von 10 mbar ausgeheizt. Die rechnerische OH-Zahl dieses Polyoxyalkylenpolyols A1 betrug 840 mg KOH / g. Der Reaktorinhalt wurde auf 80 °C abgekühlt und es wurden 1,288 g einer 12,07 %igen wässrigen Schwefelsäurelösung zugegeben. Nach einer Verrührzeit von 1 h bei 80 °C ließ man den Reaktorinhalt auf Raumtemperatur abkühlen.

Es wurden 0,073 g DMC-Katalysator zugegeben und der Inhalt des Autoklaven wurde 30 min. bei 130 °C mit 200 U/min. im Vakuum bei einem Druck von 190 mbar unter Einleiten von 50 ml Stickstoff pro Minute über einen unter dem Flüssigkeitsspiegel liegenden Verteilerring gestrippt. Es wurde sodann auf 150 °C erwärmt, bei dieser Temperatur und Rühren mit 800 U/min. wurden 628,3 g Propylenoxid über einen Zeitraum von 0,9 h in den Gasraum des Autoklaven eindosiert. Der Start der Propylenoxiddosierung erfolgte bei einem Druck von 0,08 bar. Nach einer Nachreaktionszeit von 0,88 h wurde 0,5 h bei 150 °C bei einem absoluten Druck von 1 mbar ausgeheizt, danach auf 80 °C abgekühlt und 0,603 g IRGANOX® 1076 zugegeben. Die OH-Zahl des Produktes betrug 394 mg KOH/g und die Viskosität bei 25 °C 776 mPas. Weitere relevante Daten sind in Tabelle 1 angegeben.

**Beispiel 7**

In einen 2 l Laborautoklaven wurden unter Stickstoffatmosphäre 241,5 g Ethylenglykol, 215,8 g Saccharose und 0,257 g einer 46,72 %igen Lösung von KOH in Wasser gegeben.

Der Autoklav wurde verschlossen und der Druck wurde unter Rühren (Kreuzbalkenrührer, 800 U/min) auf ca 130 mbar abgesenkt. Während des Aufheizens auf die Reaktionstemperatur von 120 °C erhöhte sich der Druck auf 370 mbar. Bei 120 °C wurden über einen Zeitraum von 7,45 h und bei einer Rührerdrehzahl von 800 U/min 742,7 g Propylenoxid in den Autoklaven dosiert. Nach einer Nachreaktionszeit von 9 h wurde der Reaktorinhalt noch über einen Zeitraum von 30 min. bei 120 °C im Vakuum bei einem Druck von 10 mbar ausgeheizt. Die rechnerische OH-Zahl dieses Polyoxyalkylenpolyols A1 betrug 600 mg KOH / g. Der Reaktorinhalt wurde auf 80 °C abgekühlt und es wurden 1,794 g einer 11,83 %igen wässrigen Schwefelsäurelösung zugegeben. Nach einer Verrührzeit von 1 h bei 90 °C wurde für einen Zeitraum von 3 h auf 110 °C erwärmt und das über die wässrige Schwefelsäurelösung eingebrachte Wasser im Vakuum (60 mbar) entfernt. Danach ließ man den Reaktorinhalt auf Raumtemperatur abkühlen und das Intermediat wurde abgelassen.

880,1 g des so hergestellten Intermediats wurden unter Stickstoffatmosphäre in einen 2 l Laborautoklaven gegeben. Es wurden 0,039 g einer 85%igen wässrigen Phosphorsäurelösung und 0,122 g DMC-Katalysator zugegeben und der Inhalt des Autoklaven wurde 30 min. bei 130 °C mit 200 U/min. im Vakuum bei einem Druck von 180 mbar unter Einleiten von 50 ml Stickstoff pro Minute über einen unter dem Flüssigkeitsspiegel liegenden Verteilerring gestrippt. Bei einer Temperatur von 130 °C und unter Rühren mit 800 U/min. wurden 320 g Propylenoxid über einen Zeitraum von 3,08 h in den Gasraum des Autoklaven eindosiert. Der Start der Propylenoxiddosierung erfolgte bei einem Druck von 0,05 bar. Nach einer Nachreaktionszeit von 3,15 h wurde 0,5 h bei 130 °C bei einem absoluten Druck von 1 mbar ausgeheizt, danach auf 80 °C abgekühlt und 0,638 g IRGANOX® 1076 zugegeben. Die OH-Zahl des Produktes betrug 431 mg KOH/g und die Viskosität bei 25 °C 403 mPas. Weitere relevante Daten sind in Tabelle 1 angegeben.

**Beispiel 8**

In einen 2 l Laborautoklaven wurden unter Stickstoffatmosphäre 382,9 g TMP und 0,209 g einer 44,81 %igen Lösung von KOH in Wasser gegeben. Der Autoklav wurde verschlossen und der Druck wurde unter Rühren (Kreuzbalkenrührer, 800 U/min) auf ca. 70 mbar abgesenkt. Während des Aufheizens auf die Reaktionstemperatur von 150 °C erhöhte sich der Druck auf 140 mbar. Bei 150 °C wurden über einen Zeitraum von 1,0 h und bei einer Rührerdrehzahl von 800 U/min ein Gemisch aus 132,3 g Propylenoxid und 56,2 g Ethylenoxid in den Autoklaven dosiert. Nach einer Nachreaktionszeit von 2,0 h wurde der Reaktorinhalt noch über einen Zeitraum von 30 min. bei 150 °C im Vakuum bei einem Druck von 10 mbar ausgeheizt. Die rechnerische OH-Zahl dieses Polyoxyalkylenpolyols A1 betrug 840,5 mg KOH / g. Der Reaktorinhalt wurde auf 80 °C abgekühlt und es wurden 1,432 g einer 11,645 %igen wässrigen Schwefelsäurelösung zugegeben. Nach einer Verrührzeit von 1 h bei 80 °C ließ man den Reaktorinhalt auf Raumtemperatur abkühlen.

Es wurden 0,184 g DMC-Katalysator zugegeben und der Inhalt des Autoklaven wurde 30 min. bei 130 °C mit 200 U/min. im Vakuum bei einem Druck von 190 mbar unter Einleiten von 50 ml Stickstoff pro Minute über einen unter dem Flüssigkeitsspiegel liegenden Verteilerring gestrippt. Es wurde sodann auf 140 °C erwärmt, bei dieser Temperatur und Rühren mit 800 U/min. wurde ein Gemisch aus 439,8 g Propylenoxid und 188,2 g Ethylenoxid über einen Zeitraum von 3,97 h in den Gasraum des Autoklaven eindosiert. Der Start der Alkylenoxidgemischdosierung erfolgte bei einem Druck von 0,06 bar. Nach einer Nachreaktionszeit von 0,33 h wurde 0,5 h bei 140 °C bei einem absoluten Druck von 1 mbar ausgeheizt, danach auf 80 °C abgekühlt und 0,605 g IRGANOX® 1076 zugegeben. Die OH-Zahl des Produktes betrug 382 mg KOH/g und die Viskosität bei 25 °C 501 mPas. Weitere relevante Daten sind in Tabelle 1 angegeben.

**Beispiel 9**

In einen 2 l Laborautoklaven wurden unter Stickstoffatmosphäre 382,8 g TMP und 0,212 g einer 46,44 %igen Lösung von KOH in Wasser gegeben. Der Autoklav wurde verschlossen und der Druck wurde unter Rühren (Kreuzbalkenrührer, 800 U/min) auf ca. 50 mbar abgesenkt. Während des Aufheizens auf die Reaktionstemperatur von 150 °C erhöhte sich der Druck auf 130 mbar. Bei 150 °C wurden über einen Zeitraum von 1,95 h und bei einer Rührerdrehzahl von 800 U/min ein Gemisch aus 208,7 g Propylenoxid und 208,7 g Ethylenoxid in den Autoklaven dosiert. Nach einer Nachreaktionszeit von 2,3 h wurde der Reaktorinhalt noch über einen Zeitraum von 30 min. bei 150 °C im Vakuum bei einem Druck von 10 mbar ausgeheizt. Die rechnerische OH-Zahl dieses Polyoxyalkylenpolyols A1 betrug 600 mg KOH / g. Der Reaktorinhalt wurde auf 80 °C abgekühlt und es wurden 1,456 g einer 11,645 %igen wässrigen Schwefelsäurelösung zugegeben. Nach einer Verrührzeit von 1 h bei 80 °C ließ man den Reaktorinhalt auf Raumtemperatur abkühlen.

Es wurden 0,184 g DMC-Katalysator zugegeben und der Inhalt des Autoklaven wurde 30 min. bei 130 °C mit 200 U/min. im Vakuum bei einem Druck von 150 mbar unter Einleiten von 50 ml Stickstoff pro Minute über einen unter dem Flüssigkeitsspiegel liegenden Verteilerring gestrippt. Es wurde sodann auf 140 °C erwärmt, bei dieser Temperatur und Rühren mit 800 U/min. wurde ein Gemisch aus 200,0 g Propylenoxid und 199,4 g Ethylenoxid über einen Zeitraum von 3,98 h in den Gasraum des Autoklaven eindosiert. Der Start der Alkylenoxidgemischdosierung erfolgte bei einem Druck von 0,05 bar. Nach einer Nachreaktionszeit von 0,33 h wurde 0,5 h bei 140 °C bei einem absoluten Druck von 1 mbar ausgeheizt, danach auf 80 °C abgekühlt und 0,603 g IRGANOX® 1076 zugegeben. Die OH-Zahl des Produktes betrug 384 mg KOH/g und die Viskosität bei 25 °C 399 mPas. Weitere relevante Daten sind in Tabelle 1 angegeben.

**Beispiel 10**

In einen 10 l Laborautoklaven wurden unter Stickstoffatmosphäre 1969,8 g Glycerin und 1,322 g einer 46,49 %igen Lösung von KOH in Wasser gegeben. Der Autoklav wurde verschlossen und der Druck wurde unter Rühren (Gitterrührer, 450 U/min) auf ca. 30 mbar abgesenkt. Nach Aufheizen auf 150 °C wurden über einen Zeitraum von 6,8 h und bei einer Rührerdrehzahl von 450 U/min 4030,7 g Propylenoxid in den Autoklaven dosiert. Nach einer Nachreaktionszeit von 6,5 h wurde der Reaktorinhalt noch über einen Zeitraum von 30 min. bei 150 °C im Vakuum bei einem Druck von 30 mbar ausgeheizt. Die rechnerische OH-Zahl dieses Polyoxyalkylenpolyols A1 betrug 600 mg KOH / g. Der Reaktorinhalt wurde auf 80 °C abgekühlt und es wurden 5,435 g einer 20,35 %igen wässrigen Perchlorsäurelösung zugegeben. Nach einer Verrührzeit von 1 h bei 80 °C wurde für einen Zeitraum von 3 h auf 110 °C erwärmt und das über die wässrige Perchlorsäurelösung eingebrachte Wasser im Vakuum (60 mbar) entfernt. Danach ließ man den Reaktorinhalt auf Raumtemperatur abkühlen und das Intermediat wurde abgelassen.

500,1 g des so hergestellten Intermediats wurden unter Stickstoffatmosphäre in einen 10 l Laborautoklaven gegeben. Es wurden 0,077 g DMC-Katalysator zugegeben und der Inhalt des Autoklaven wurde 30 min. bei 130 °C mit 130 U/min. (Gitterrührer) im Vakuum bei einem Druck von 160 mbar unter Einleiten von 50 ml Stickstoff pro Minute über einen unter dem Flüssigkeitsspiegel liegenden Verteilerring gestrippt. Bei einer Temperatur von 130 °C und unter Rühren mit 450 U/min. wurden 235,1 g Propylenoxid über einen Zeitraum von 2,03 h in den Gasraum des Autoklaven eindosiert. Der Start der Propylenoxiddosierung erfolgte bei einem Druck von 0,05 bar. Nach einer Nachreaktionszeit von 0,92 h wurde 0,5 h bei 130 °C bei einem absoluten Druck von 50 mbar ausgeheizt, danach auf 80 °C abgekühlt und 0,399 g IRGANOX® 1076 zugegeben. Die OH-Zahl des Produktes betrug 402 mg KOH/g und die Viskosität bei 25 °C 393 mPas. Weitere relevante Daten sind in Tabelle 1 angegeben.

**Beispiel 11**

In einen 2 l Laborautoklaven wurden unter Stickstoffatmosphäre 574,1 g TMP und 0,271 g einer 46,44 %igen Lösung von KOH in Wasser gegeben. Der Autoklav wurde verschlossen und der Druck wurde unter Rühren (Kreuzbalkenrührer, 800 U/min) auf ca. 70 mbar abgesenkt. Während des Aufheizens auf die Reaktionstemperatur von 150 °C erhöhte sich der Druck auf 150 mbar. Bei 150 °C wurden über einen Zeitraum von 5,1 h und bei einer Rührerdrehzahl von 800 U/min 626,0 g Propylenoxid in den Autoklaven dosiert. Nach einer Nachreaktionszeit von 7 h wurde der Reaktorinhalt noch über einen Zeitraum von 30 min. bei 150 °C im Vakuum bei einem Druck von 50 mbar ausgeheizt. Die rechnerische OH-Zahl dieses Polyoxyalkylenpolyols A1 betrug 600 mg KOH / g. Der Reaktorinhalt wurde auf 80 °C abgekühlt und es wurden 1,121 g einer 20,35 %igen wässrigen Perchlorsäurelösung zugegeben. Nach einer Verrührzeit von 1 h bei 80 °C wurde für einen Zeitraum von 3 h auf 110 °C erwärmt und das über die wässrige Perchlorsäurelösung eingebrachte Wasser im Vakuum (160 mbar) entfernt. Danach ließ man den Reaktorinhalt auf Raumtemperatur abkühlen und das Intermediat wurde abgelassen.

500,0 g des so hergestellten Intermediats wurden unter Stickstoffatmosphäre in einen 2 l Laborautoklaven gegeben. Es wurden 0,079 g DMC-Katalysator zugegeben und der Inhalt des Autoklaven wurde 30 min. bei 130 °C mit 200 U/min. (Kreuzbalkenrührer) im Vakuum bei einem Druck von 160 mbar unter Einleiten von 50 ml Stickstoff pro Minute über einen unter dem Flüssigkeitsspiegel liegenden Verteilerring gestrippt. Bei einer Temperatur von 130 °C und unter Rühren mit 800 U/min. wurden 235,1 g Propylenoxid über einen Zeitraum von 2,03 h in den Gasraum des Autoklaven eindosiert. Der Start der Propylenoxiddosierung erfolgte bei einem Druck von 0,04 bar. Nach einer Nachreaktionszeit von 0,67 h wurde 0,5 h bei 130 °C bei einem absoluten Druck von 50 mbar ausgeheizt, danach auf 80 °C abgekühlt und 0,380 g IRGANOX® 1076 zugegeben. Die OH-Zahl des Produktes betrug 395 mg KOH/g und die Viskosität bei 25 °C 745 mPas. Weitere relevante Daten sind in Tabelle 1 angegeben.

**Beispiel 12**

In einen 2 l Laborautoklaven wurden unter Stickstoffatmosphäre 239,4 g TMP und 0,114 g einer 44,81 %igen Lösung von KOH in Wasser gegeben. Der Autoklav wurde verschlossen und der Druck wurde unter Rühren (Kreuzbalkenrührer, 800 U/min) auf ca. 100 mbar abgesenkt. Während des Aufheizens auf die Reaktionstemperatur von 150 °C erhöhte sich der Druck auf 210 mbar. Bei 150 °C wurden über einen Zeitraum von 1,02 h und bei einer Rührerdrehzahl von 800 U/min 118 g Propylenoxid in den Autoklaven dosiert. Nach einer Nachreaktionszeit von 4,0 h wurde der Reaktorinhalt noch über einen Zeitraum von 30 min. bei 150 °C im Vakuum bei einem Druck von 10 mbar ausgeheizt. Die rechnerische OH-Zahl dieses Polyoxyalkylenpolyols A1 betrug 840 mg KOH / g. Der Reaktorinhalt wurde auf 80 °C abgekühlt und es wurden 0,753 g einer 12,22 %igen wässrigen Schwefelsäurelösung zugegeben. Nach einer Verrührzeit von 1 h bei 80 °C ließ man den Reaktorinhalt auf Raumtemperatur abkühlen.

Es wurden 0,063 g DMC-Katalysator zugegeben und der Inhalt des Autoklaven wurde 30 min. bei 130 °C mit 200 U/min. im Vakuum bei einem Druck von 130 mbar unter Einleiten von 50 ml Stickstoff pro Minute über einen unter dem Flüssigkeitsspiegel liegenden Verteilerring gestrippt. Es wurde sodann auf 150 °C erwärmt, bei dieser Temperatur und Rühren mit 800 U/min. wurden 843 g Propylenoxid über einen Zeitraum von 2,02 h in den Gasraum des Autoklaven eindosiert. Der Start der Propylenoxiddosierung erfolgte bei einem Druck von 0,08 bar. Nach einer Nachreaktionszeit von 0,45 h wurde 0,5 h bei 150 °C bei einem absoluten Druck von 1 mbar ausgeheizt, danach auf 80 °C abgekühlt und 0,616 g IRGANOX® 1076 zugegeben. Die OH-Zahl des Produktes betrug 244 mg KOH/g und die Viskosität bei 25 °C 413 mPas. Weitere relevante Daten sind in Tabelle 1 angegeben.

**Beispiel 13**

In einen 2 l Laborautoklaven wurden unter Stickstoffatmosphäre 287,1 g TMP und 0,135 g einer 44,81 %igen Lösung von KOH in Wasser gegeben. Der Autoklav wurde verschlossen und der Druck wurde unter Rühren (Kreuzbalkenrührer, 800 U/min) auf ca. 70 mbar abgesenkt. Während des Aufheizens auf die Reaktionstemperatur von 150 °C erhöhte sich der Druck auf 140 mbar. Bei 150 °C wurden über einen Zeitraum von 3,1 h und bei einer Rührerdrehzahl von 800 U/min 313,0 g Propylenoxid in den Autoklaven dosiert. Nach einer Nachreaktionszeit von 6,5 h wurde der Reaktorinhalt noch über einen Zeitraum von 30 min. bei 150 °C im Vakuum bei einem Druck von 10 mbar ausgeheizt. Die rechnerische OH-Zahl dieses Polyoxyalkylenpolyols A1 betrug 600 mg KOH / g. Der Reaktorinhalt wurde auf 80 °C abgekühlt und es wurden 0,65 g einer 12,220 %igen wässrigen Schwefelsäurelösung zugegeben. Nach einer Verrührzeit von 1 h bei 80 °C ließ man den Reaktorinhalt auf Raumtemperatur abkühlen.

Es wurden 0,068 g DMC-Katalysator zugegeben und der Inhalt des Autoklaven wurde 30 min. bei 130 °C mit 200 U/min. im Vakuum bei einem Druck von 180 mbar unter Einleiten von 50 ml Stickstoff pro Minute über einen unter dem Flüssigkeitsspiegel liegenden Verteilerring gestrippt. Es wurden sodann unter Rühren mit 800 U/min. und ebenfalls bei 130 °C 600,1 g Propylenoxid über einen Zeitraum von 3,03 h in den Gasraum des Autoklaven eindosiert. Der Start der Alkylenoxidgemischdosierung erfolgte bei einem Druck von 0,07 bar. Nach einer Nachreaktionszeit von 0,97 h wurde 0,5 h bei 130 °C bei einem absoluten Druck von 1 mbar ausgeheizt, danach auf 80 °C abgekühlt und 0,604 g IRGANOX® 1076 zugegeben. Die OH-Zahl des Produktes betrug 292 mg KOH/g und die Viskosität bei 25 °C 477 mPas. Weitere relevante Daten sind in Tabelle 1 angegeben.

**Vergleichsbeispiel V1**

In einen 2 l Laborautoklaven wurden unter Stickstoffatmosphäre 383,0 g TMP und 0,185 g einer 44,81 %igen Lösung von KOH in Wasser gegeben. Der Autoklav wurde verschlossen und der Druck wurde unter Rühren (Kreuzbalkenrührer, 800 U/min) auf ca. 110 mbar abgesenkt. Während des Aufheizens auf die Reaktionstemperatur von 150 °C erhöhte sich der Druck auf 150 mbar. Bei 150 °C wurden über einen Zeitraum von 1,02 h und bei einer Rührerdrehzahl von 800 U/min 189,1 g Propylenoxid in den Autoklaven dosiert. Nach einer Nachreaktionszeit von 3,6 h wurde der Reaktorinhalt noch über einen Zeitraum von 30 min. bei 150 °C im Vakuum bei einem Druck von 50 mbar ausgeheizt. Die rechnerische OH-Zahl dieses Polyoxyalkylenpolyols A1 betrug 840 mg KOH / g. Der Reaktorinhalt wurde auf 80 °C abgekühlt und es wurden 1,192 g einer 12,33 %igen wässrigen Schwefelsäurelösung zugegeben. Nach einer Verrührzeit von 1 h bei 80 °C ließ man den Reaktorinhalt auf Raumtemperatur abkühlen.

Es wurden 0,066 g DMC-Katalysator zugegeben und der Inhalt des Autoklaven wurde 30 min. bei 130 °C mit 200 U/min. im Vakuum bei einem Druck von 150 mbar unter Einleiten von 50 ml Stickstoff pro Minute über einen unter dem Flüssigkeitsspiegel liegenden Verteilerring gestrippt. Es wurde sodann auf 150 °C erwärmt, bei dieser Temperatur und Rühren mit 800 U/min. wurde versucht 628,3 g Propylenoxid über einen Zeitraum von 4,0 h in den Gasraum des Autoklaven zu dosieren. Der Start der Propylenoxiddosierung erfolgte bei einem Druck von 0,05 bar. Nach Dosierung von 311,5 g Propylenoxid (Dosierzeit 2,0 h) wurde die Reaktion abgebrochen, da nach anfänglicher Aktivierung des Katalysators dieser deaktivierte, was sich durch einen Druckanstieg auf 3,4 bar bemerkbar machte. Nach einer Nachreaktionszeit von 5,5 h war der Druck lediglich auf 2,79 bar abgefallen. Große Mengen an nicht abreagiertem Propylenoxid mussten im Vakuum entfernt werden. Weitere relevante Daten sind in Tabelle 1 angegeben.

**Vergleichsbeispiel V2**

In einen 2 l Laborautoklaven wurden unter Stickstoffatmosphäre 706,5 g TMP und 8,139 g einer 44,81 %igen Lösung von KOH in Wasser gegeben. Der Autoklav wurde verschlossen und das mit der wässrigen Kaliumhydroxidlösung eingetragene Wasser und das durch Reaktion entstandene Wasser wurde unter Rühren (Kreuzbalkenrührer, 200 U/min) bei 115 °C im Vakuum bei einem Druck von 70 mbar über einen Zeitraum von 3 h entfernt. Danach wurde die Temperatur auf die Reaktionstemperatur von 150 °C angehoben, wobei sich der Druck auf 180 mbar erhöhte. Bei 150 °C wurden über einen Zeitraum von 1,75 h und bei einer Rührerdrehzahl von 800 U/min 493,6 g Propylenoxid in den Autoklaven dosiert. Nach einer Nachreaktionszeit von 0,5 h wurde der Reaktorinhalt noch über einen Zeitraum von 30 min. bei 150 °C im Vakuum bei einem Druck von 50 mbar ausgeheizt. Die rechnerische OH-Zahl dieses Polyoxyalkylenpolyols A1 betrug 738 mg KOH / g. Der Reaktorinhalt wurde auf 80 °C abgekühlt und mit 120 g Wasser versetzt. Danach wurden 25,839 g einer 12,33 %igen wässrigen Schwefelsäurelösung zugegeben. Nach einer Verrührzeit von 1 h bei 80 °C wurde das Wasser über einen Zeitraum von 3 h bei 115 °C und einem Druck von 1 mbar entfernt. Bei 80 °C wurden 0,613 g IRGANOX® 1076 zugegeben und für 1 h verrührt. Das ausgefallene Kaliumsalz wurde anschließend durch Filtration über ein Tiefenfilter (T 750, Fa. Seitz) entfernt. Der Restkaliumgehalt betrug 9 ppm.

651,7 g des so hergestellten Intermediats wurden unter Stickstoffatmosphäre in einen 2 l Laborautoklaven gegeben. Es wurden 0,060 g DMC-Katalysator zugegeben und der Inhalt des Autoklaven wurde 30 min. bei 130 °C mit 200 U/min. (Kreuzbalkenrührer) im Vakuum bei einem Druck von 220 mbar unter Einleiten von 50 ml Stickstoff pro Minute über einen unter dem Flüssigkeitsspiegel liegenden Verteilerring gestrippt. Es wurde versucht bei 130 °C und Rühren mit 800 U/min. 550 g Propylenoxid über einen Zeitraum von 4,0 h in den Gasraum des Autoklaven zu dosieren. Der Start der Propylenoxiddosierung erfolgte bei einem Druck von 0,05 bar. Nach Dosierung von 127,2 g Propylenoxid wurde die Reaktion abgebrochen, da sich der DMC-Katalysator nicht ausreichend aktivieren ließ, was sich durch einen steilen Druckanstieg auf 3,48 bar bemerkbar machte. Innerhalb einer Nachreaktionszeit von 1,5 h fiel der Druck praktisch nicht ab. Große Mengen an nicht abreagiertem Propylenoxid mussten im Vakuum entfernt werden. Weitere relevante Daten sind in Tabelle 1 angegeben.

**Vergleichsbeispiel V3**

In einen 2 l Laborautoklaven wurden unter Stickstoffatmosphäre 383,7 g TMP und 0,195 g einer 44,81 %igen Lösung von KOH in Wasser gegeben. Der Autoklav wurde verschlossen und der Druck wurde unter Rühren (Kreuzbalkenrührer, 800 U/min) auf ca 40 mbar abgesenkt. Während des Aufheizens auf die Reaktionstemperatur von 150 °C erhöhte sich der Druck auf 60 mbar. Bei 150 °C wurden über einen Zeitraum von 1,02 h und bei einer Rührerdrehzahl von 800 U/min 189,1 g Propylenoxid in den Autoklaven dosiert. Nach einer Nachreaktionszeit von 3,0 h wurde der Reaktorinhalt noch über einen Zeitraum von 30 min. bei 150 °C im Vakuum bei einem Druck von 50 mbar ausgeheizt. Die rechnerische OH-Zahl dieses Polyoxyalkylenpolyols A1 betrug 840 mg KOH / g. Der Reaktorinhalt wurde auf 80 °C abgekühlt und es wurden 1,254 g einer 12,33 %igen wässrigen Schwefelsäurelösung zugegeben. Nach einer Verrührzeit von 1 h bei 80 °C ließ man den Reaktorinhalt auf Raumtemperatur abkühlen.

Es wurden 0,066 g DMC-Katalysator zugegeben und der Inhalt des Autoklaven wurde 30 min. bei 150 °C mit 200 U/min. im Vakuum bei einem Druck von 220 mbar unter Einleiten von 50 ml Stickstoff pro Minute über einen unter dem Flüssigkeitsspiegel liegenden Verteilerring gestrippt. Es wurde sodann versucht bei dieser Temperatur und Rühren mit 800 U/min. 628,3 g Propylenoxid über einen Zeitraum von 3,5 h in den Gasraum des Autoklaven zu dosieren. Der Start der Propylenoxiddosierung erfolgte bei einem Druck von 0,05 bar. Nach Dosierung von 256,2 g Propylenoxid wurde die Reaktion abgebrochen, da sich der DMC-Katalysator nicht aktivieren ließ, was sich durch einen Druckanstieg auf 5,3 bar bemerkbar machte . Nach einer Nachreaktionszeit von 4 h war der Druck lediglich auf 5,0 bar abgefallen. Große Mengen an nicht abreagiertem Propylenoxid mussten im Vakuum entfernt werden. Weitere relevante Daten sind in Tabelle 1 angegeben.

**Vergleichsbeispiel V4**

In einen 2 l Laborautoklaven wurden unter Stickstoffatmosphäre 287,2 g TMP und 0,134 g einer 44,81 %igen Lösung von KOH in Wasser gegeben. Der Autoklav wurde verschlossen und der Druck wurde unter Rühren (Kreuzbalkenrührer, 800 U/min) auf ca 80 mbar abgesenkt. Während des Aufheizens auf die Reaktionstemperatur von 150 °C erhöhte sich der Druck auf 160 mbar. Bei 150 °C wurden über einen Zeitraum von 1,57 h und bei einer Rührerdrehzahl von 800 U/min 313,1 g Propylenoxid in den Autoklaven dosiert. Nach einer Nachreaktionszeit von 5,8 h wurde der Reaktorinhalt noch über einen Zeitraum von 30 min. bei 150 °C im Vakuum bei einem Druck von 80 mbar ausgeheizt. Die rechnerische OH-Zahl dieses Polyoxyalkylenpolyols A1 betrug 600 mg KOH / g. Der Reaktorinhalt wurde auf 80 °C abgekühlt und es wurden 0,434 g einer 12,22 %igen wässrigen Schwefelsäurelösung zugegeben. Nach einer Verrührzeit von 1 h bei 80 °C ließ man den Reaktorinhalt auf Raumtemperatur abkühlen.

Es wurden 0,065 g DMC-Katalysator zugegeben und der Inhalt des Autoklaven wurde 30 min. bei 130 °C mit 200 U/min. im Vakuum bei einem Druck von 180 mbar unter Einleiten von 50 ml Stickstoff pro Minute über einen unter dem Flüssigkeitsspiegel liegenden Verteilerring gestrippt. Es wurde sodann versucht bei dieser Temperatur und Rühren mit 800 U/min. 310,7 g Propylenoxid über einen Zeitraum von 3,0 h in den Gasraum des Autoklaven zu dosieren. Der Start der Propylenoxiddosierung erfolgte bei einem Druck von 0,07 bar. Nach Dosierung von 250 g Propylenoxid über einen Zeitraum von 1,25 h wurde die Reaktion abgebrochen, da sich der DMC-Katalysator nicht aktivieren ließ, was sich durch einen Druckanstieg auf 5,5 bar bemerkbar machte. Nach einer Nachreaktionszeit von 2 h war der Druck zwar auf 4,2 bar abgefallen, das für die Aktivierung des DMC-Katalysators typische Druckprofil (beschleunigter Druckabfall) ließ sich jedoch nicht erkennen. Es wurde dann eine zweite Teilmenge von 61 g Propylenoxid über einen Zeitraum von 0,28 h zugegeben. Hierbei stieg der Druck wieder auf 5,5 bar an. In der sich anschließenden Nachreaktionszeit von 3,5 h fiel der Druck auf 3,5 bar. Es ließ sich wiederum keine Katalysatoraktivierung beobachten. Große Mengen an nicht abreagiertem Propylenoxid mussten im Vakuum entfernt werden. Weitere relevante Daten sind in Tabelle 1 angegeben.

**Tabelle 1**

| Beispiel | Intermediat A1 enthält das Salz einer anorganischen Brønsted-Säure mit einem pKs-Wert < 1? | Stripptemperatur vor DMC-Schritt (Ts) [°C] | $T_R / A_R$ [h * °C / %] | OHZ Endprodukt (Polyoxyalkylenpolyol 1) nach Schritt ii) [mg KOH / g] | (Stoffmenge [mol] basischer Katalysator) / Stoffmenge [mol] aktive H-Atome der Starterverbindung(en)) | $OHZ_{A1}/T_R$ |
|---|---|---|---|---|---|---|
| 1 | Ja | 130 | 5,15 | 391 | 1 / 5250 | 5,68 |
| 2 | Ja | 130 | 2,81 | 392 | 1 / 5700 | 4,62 |
| 3 | Ja | 130 | 3,90 | 425 | 1 / 4500 | 4,62 |
| 4 | Ja | 130 | 2,69 | 391 | 1 / 5400 | 4,62 |
| 5 | Ja | 130 | 5,63 | 393 | 1 / 5900 | 6,00 |
| 6 | Ja | 130 | 1,35 | 394 | 1 / 5550 | 5,60 |
| 7 | Ja | 130 | 4,00 | 431 | 1 / 6000 | 4,62 |
| 8 | Ja | 130 | 5,56 | 382 | 1 / 5150 | 6,00 |
| 9 | Ja | 130 | 5,57 | 384 | 1 / 4900 | 4,30 |
| 10 | Ja | 130 | 2,64 | 402 | 1 / 5850 | 4,62 |
| 11 | Ja | 130 | 2,64 | 395 | 1 / 5700 | 4,62 |
| 12 | Ja | 130 | 3,03 | 244 | 1 / 5900 | 5,60 |
| 13 | Ja | 130 | 3,94 | 292 | 1 / 5950 | 4,62 |
| V1 | Ja | 130 | 6,00 | n. b. | 1 / 5800 | 5,60 |
| V2 | Nein | 130 | 5,20 | n. b. | 1 / 240 | 5,68 |
| V3 | Ja | 150 | 5,25 | n. b. | 1 / 5500 | 5,60 |
| V4 | Nein | 130 | 3,90 | n. b. | 1 / 6000 | 4,62 |

$T_R$: Aktivierungs- und / oder Reaktionstemperatur im DMC-katalysierten Reaktionsschritt

$A_R$: (Angestrebte) Alkylenoxiddosierrate im DMC-katalysierten Reaktionsschritt als der pro Stunde dosierte prozentuale Anteil der insgesamt zu dosierenden Alkylenoxidmasse n. b.: Nicht bestimmt, da die Alkylenoxiddosierung vor Erreichen der Zielmenge aufgrund zu geringer Reaktivität abgebrochen werden musste

**Patentansprüche**

1. Verfahren zur Herstellung eines Polyoxyalkylenpolyols 1) durch Umsetzung mindestens einer H-funktionellen Starterverbindung mit mindestens einem Alkylenoxid, umfassend folgende Schritte:

   i) Bereitstellung einer Komponente A), enthaltend ein Polyoxyalkylenpolyol A1) mit einer berechneten OH-Zahl ($OHZ_{A1}$) von 600 bis 1060 mg KOH / g und ein neutrales oder saures Salz einer anorganischen Brønsted-Säure durch i

      -1) Umsetzung einer H-funktionellen Starterverbindung mit einem oder mehreren Alkylenoxiden B1) unter Verwendung eines basischen Katalysators,
      i-2) Umsetzung des aus i-1) resultierenden Gemisches mit einer Brønsted-Säure mit einem pKs-Wert < 1,

   ii) Anschließende Umsetzung der Komponente A) mit einem oder mehreren Alkylenoxiden B2) in Anwesenheit eines DMC-Katalysators,
   wobei

      ii-1) die aus Schritt i) resultierende Komponente A) mit einem DMC-Katalysator versetzt wird und bei einer Temperatur Ts von maximal 145 °C gestrippt wird
      und
      ii-2) das aus ii-1) resultierende Gemisch mit einem oder mehreren Alkylenoxiden B2) zu einem Polyoxyalkylenpolyol 1) umgesetzt wird, wobei der Quotient aus der Reaktionstemperatur $T_R$ und der Alkylenoxiddosierrate $A_R$, definiert als der pro Stunde dosierte prozentuale Anteil der in Schritt ii) zu dosierenden Alkylenoxidmasse,

$$T_R / A_R < 5{,}9 \ [h * °C / \%]$$

      beträgt und
      wobei die OH-Zahl des nach Durchführung von Schritt ii) erhaltenen Polyoxyalkylenpolyols 1) $\geq$ 200 mg KOH / g beträgt.

2. Verfahren gemäß Anspruch 1, **dadurch gekennzeichnet, dass** in Schritt i-1) mindestens eine Verbindung ausgewählt aus der Gruppe bestehend aus Alkalimetallhydroxid, Erdalkalimetallhydroxid, Alkalimetallhydrid, Erdalkalimetallhydrid, Alkalimetallcarboxylat und Erdalkalimetallcarboxylat als basischer Katalysator eingesetzt wird.

3. Verfahren gemäß Anspruch 1, **dadurch gekennzeichnet, dass** in Schritt i-1) Alkalimetallhydroxid als basischer Katalysator eingesetzt wird.

4. Verfahren gemäß Anspruch 1, **dadurch gekennzeichnet, dass** als basischer Katalysator in Schritt i-1) Natriumhydroxid, Kaliumhydroxid und/oder Cäsiumhydroxid verwendet wird.

5. Verfahren gemäß Anspruch 1 oder 2, **dadurch gekennzeichnet, dass** in Schritt i-1) das Verhältnis [(Stoffmenge [mol] basischer Katalysator) / (Stoffmenge [mol] aktive H-Atome der Starterverbindung(en))] mindestens 1 / 8000 beträgt.

6. Verfahren gemäß einem der vorstehenden Ansprüche, **dadurch gekennzeichnet, dass** in Schritt i-1) als Alkylenoxid B1) bevorzugt Propylenoxid, Ethylenoxid oder ein Gemisch aus Propylenoxid und Ethylenoxid eingesetzt wird.

7. Verfahren gemäß einem der vorstehenden Ansprüche, **dadurch gekennzeichnet, dass** in Schritt ii) als Alkylenoxid B2) bevorzugt Propylenoxid, Ethylenoxid oder ein Gemisch aus Propylenoxid und Ethylenoxid eingesetzt wird

8. Verfahren gemäß einem der vorstehenden Ansprüche, **dadurch gekennzeichnet, dass** in Schritt i-2) eine Brønsted-Säure mit einem pKs-Wert < 0 eingesetzt wird.

9. Verfahren gemäß einem der vorstehenden Ansprüche, **dadurch gekennzeichnet, dass** das nach Schritt ii) erhältliche Polyoxyalkylenpolyol 1) eine OHZ von > 250 mg KOH / g aufweist.

10. Verfahren gemäß einem der vorstehenden Ansprüche, **dadurch gekennzeichnet, dass** die Stripptemperatur Ts 90 bis 135 °C beträgt.

11. Verfahren gemäß einem der vorstehenden Ansprüche, **dadurch gekennzeichnet, dass** das Verhältnis der berechneten OH-Zahl des Polyoxyalkylenpolyols A1) ($OHZ_{A1}$) zur Reaktionstemperatur $T_R$ in Schritt ii) folgender Ungleichung genügt:

$$OHZ_{A1} / T_R < 6{,}3 \ [mg \ KOH / (g * {}^\circ C)]$$

12. Verfahren gemäß einem der vorstehenden Ansprüche, **dadurch gekennzeichnet, dass** die Molmasse des Polyoxyalkylenpolyols 1) mindestens 44 g/mol höher ist als die Molmasse des Polyoxyalkylenpolyols A1).

13. Polyoxyalkylenpolyol 1) erhältlich nach einem der Ansprüche 1 bis 12.

14. Verwendung der Polyoxyalkylenpolyole 1) gemäß Anspruch 13 zur Herstellung von Polyurethanen.

15. Polyurethane enthaltend Polyoxyalkylenpolyole 1) gemäß Anspruch 13.

**Claims**

1. Process for preparing a polyoxyalkylene polyol 1) by reacting at least one H-functional starter compound with at least one alkylene oxide, comprising the following steps:

   i) providing a component A) comprising a polyoxyalkylene polyol A1) having a calculated OH number ($OHN_{A1}$) of 600 to 1060 mg KOH/g and a neutral or acidic salt of an inorganic Brønsted acid by

   i-1) reacting an H-functional starter compound with one or more alkylene oxides B1) using a basic catalyst,
   i-2) reacting the mixture resulting from i-1) with a Brønsted acid having a pKa < 1,

   ii) subsequently reacting component A) with one or more alkylene oxides B2) in the presence of a DMC catalyst, where

   ii-1) the component A) resulting from step i) is admixed with a DMC catalyst and stripped at a temperature $T_S$ of not more than 145°C
   and
   ii-2) the mixture resulting from ii-1) is reacted with one or more alkylene oxides B2) to give a polyoxyalkylene polyol 1), where the quotient of the reaction temperature $T_R$ and the alkylene oxide metering rate $A_R$, defined as the percentage of the mass of alkylene oxide to be metered in in step ii) which is metered in per hour, is

   $$T_R/A_R < 5.9 \ [h * {}^\circ C \ / \ \%]$$

   and
   wherein the OH number of the polyoxyalkylene polyol 1) obtained after performance of step ii) is $\geq$ 200 mg KOH/g.

2. Process according to Claim 1, **characterized in that**, in step i-1), at least one compound selected from the group consisting of alkali metal hydroxide, alkaline earth metal hydroxide, alkali metal hydride, alkaline earth metal hydride, alkali metal carboxylate and alkaline earth metal carboxylate is used as basic catalyst.

3. Process according to Claim 1, **characterized in that**, in step i-1), alkali metal hydroxide is used as basic catalyst.

4. Process according to Claim 1, **characterized in that** the basic catalyst used in step i-1) is sodium hydroxide, potassium hydroxide and/or cesium hydroxide.

5. Process according to Claim 1 or 2, **characterized in that**, in step i-1), the ratio [(molar amount [mol] of basic catalyst)/(molar amount [mol] of active hydrogen atoms in the starter compound(s))] is at least 1/8000.

6.  Process according to any of the preceding claims, **characterized in that**, in step i-1), the alkylene oxide B1) used is preferably propylene oxide, ethylene oxide or a mixture of propylene oxide and ethylene oxide.

7.  Process according to any of the preceding claims, **characterized in that**, in step ii), the alkylene oxide B2) used is preferably propylene oxide, ethylene oxide or a mixture of propylene oxide and ethylene oxide.

8.  Process according to any of the preceding claims, **characterized in that**, in step i-2), a Brønsted acid having a pKa < 0 is used.

9.  Process according to any of the preceding claims, **characterized in that** the polyoxyalkylene polyol 1) obtained after step ii) has an OHN of > 250 mg KOH/g.

10. Process according to any of the preceding claims, **characterized in that** the stripping temperature Ts is 90 to 135°C.

11. Process according to any of the preceding claims, **characterized in that** the ratio of the calculated OH number of the polyoxyalkylene polymer A1) ($OHN_{A1}$) to the reaction temperature $T_R$ in step ii) satisfies the following inequation:

$$OHN_{A1} \; / \; T_R \; < \; 6.3 \; [mg \; KOH \; / \; (g \; * \; °C)]$$

12. Process according to any of the preceding claims, **characterized in that** the molar mass of the polyoxyalkylene polyol 1) is at least 44 g/mol higher than the molar mass of the polyoxyalkylene polyol A1).

13. Polyoxyalkylene polyol 1) obtainable according to any of Claims 1 to 12.

14. Use of the polyoxyalkylene polyols 1) according to Claim 13 for preparation of polyurethanes.

15. Polyurethane comprising polyoxyalkylene polyols 1) according to Claim 13.


**Revendications**

1.  Procédé pour la préparation d'un polyoxyalkylènepolyol 1) par transformation d'au moins un composé de départ fonctionnalisé par H avec au moins un oxyde alkylène comprenant les étapes suivantes :

    i) mise à disposition d'un composant A), contenant un polyoxyalkylènepolyol A1) doté d'un indice d'OH calculé ($OHZ_{A1}$) de 600 à 1 060 mg de KOH/g et un sel neutre ou acide d'un acide de Brønsted inorganique par

    i-1) transformation d'un composé de départ fonctionnalisé par H avec un ou plusieurs oxydes d'alkylène B1) en utilisant un catalyseur basique,
    i-2) transformation du mélange résultant de i-1) avec un acide de Brønsted doté d'une valeur de pKs < 1,

    ii) transformation ultérieure du composant A) avec un ou plusieurs oxydes d'alkylène B2) en présence d'un catalyseur de type DMC,

    ii-1) le composant A) résultant de l'étape i) étant mis à réagir avec un catalyseur de type DMC et étant entraîné à une température Ts d'au maximum 145 °C
    et
    ii-2) le mélange résultant de ii-1) étant transformé avec un ou plusieurs oxydes d'alkylène B2) en un polyoxyalkylènepolyol 1), le quotient de la température de réaction $T_R$ et de la vitesse de dosage d'oxyde alkylène, définie comme la proportion en pourcentage de la masse d'oxyde alkylène à doser dans l'étape ii) dosée par heure,

$$T_R/A_R \; est \; < \; 5,9 \; [h*°C/\%]$$

et

l'indice d'OH du polyoxyalkylènepolyol 1) obtenu après la mise en œuvre de l'étape ii) est ≥ 200 mg de KOH/g.

2. Procédé selon la revendication 1, **caractérisé en ce que** dans l'étape i-1) au moins un composé choisi dans le groupe constitué par un hydroxyde de métal alcalin, un hydroxyde de métal alcalino-terreux, un hydrure de métal alcalin, un hydrure de métal alcalino-terreux, un carboxylate de métal alcalin et un carboxylate de métal alcalino-terreux est utilisé en tant que catalyseur basique.

3. Procédé selon la revendication 1, **caractérisé en ce que** dans l'étape i-1) un hydroxyde de métal alcalin est utilisé en tant que catalyseur basique.

4. Procédé selon la revendication 1, **caractérisé en ce qu'**en tant que catalyseur basique dans l'étape i-1), de l'hydroxyde de sodium, de l'hydroxyde de potassium et/ou de l'hydroxyde de césium est utilisé.

5. Procédé selon la revendication 1 ou 2, **caractérisé en ce que** dans l'étape i-1) le rapport [(quantité [mole] de catalyseur basique)/(quantité [mole] d'atomes H actifs du ou des composé(s) de départ)] est d'au moins 1/8 000.

6. Procédé selon l'une quelconque des revendications précédentes, **caractérisé en ce que** dans l'étape i-1), préférablement de l'oxyde de propylène, de l'oxyde d'éthylène ou un mélange d'oxyde de propylène et d'oxyde d'éthylène est utilisé en tant qu'oxyde alkylène B1).

7. Procédé selon l'une quelconque des revendications précédentes, **caractérisé en ce que** dans l'étape ii), préférablement de l'oxyde de propylène, de l'oxyde d'éthylène ou un mélange d'oxyde de propylène et d'oxyde d'éthylène est utilisé en tant qu'oxyde alkylène B2).

8. Procédé selon l'une quelconque des revendications précédentes, **caractérisé en ce que** dans l'étape i-2) un acide de Brønsted doté d'une valeur de pKs < 0 est utilisé.

9. Procédé selon l'une quelconque des revendications précédentes, **caractérisé en ce que** le polyoxyalkylènepolyol 1) pouvant être obtenu après l'étape ii) présente un OHZ de > 250 mg de KOH/g.

10. Procédé selon l'une quelconque des revendications précédentes, **caractérisé en ce que** la température d'entraînement $T_S$ est de 90 à 135 °C.

11. Procédé selon l'une quelconque des revendications précédentes, **caractérisé en ce que** le rapport de l'indice d'OH calculé du polyoxyalkylènepolyol A1) ($OHZ_{A1}$) à la température de réaction $T_R$ dans l'étape ii) satisfait à l'inégalité suivante :

$$OHZ_{A1} / T_R < 6,3 \ [mg \ KOH \ / \ (g * °C)]$$ .

12. Procédé selon l'une quelconque des revendications précédentes, **caractérisé en ce que** la masse molaire du polyoxyalkylènepolyol 1) est au moins de 44 g/mole plus haute que la masse molaire du polyoxyalkylènepolyol A1).

13. Polyoxyalkylènepolyol 1) pouvant être obtenu selon l'une quelconque des revendications 1 à 12.

14. Utilisation des polyoxyalkylènepolyols 1) selon la revendication 13 pour la préparation de polyuréthanes.

15. Polyuréthanes contenant des polyoxyalkylènepolyols 1) selon la revendication 13.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9820061 A
- US 2004167316 F
- US 4521548 A
- JP 10030023 A
- US 4110268 A
- DE 10024313 A
- WO 0114456 A
- JP 6157743 A
- WO 9620972 A
- US 3823145 A
- EP 2028211 A1
- WO 2009152954 A
- US 5470813 A
- EP 700949 A
- EP 743093 A
- EP 761708 A
- WO 9740086 A
- WO 9816310 A
- WO 0047649 A
- WO 2011075333 A1
- WO 2012134849 A
- WO 2012091968 A
- WO 9729146 A
- EP 1577334 A
- US 20100324340 A
- WO 2012084762 A
- EP 1525244 A
- WO 9914258 A
- US 3404109 A
- US 3829505 A
- US 3941849 A
- US 5158922 A
- EP 10163170
- JP 4145123 A
- WO 0139883 A
- WO 0180994 A
- US 4987271 A
- DE 3132258 A
- EP 406440 A
- US 5391722 A
- US 5099075 A
- US 4721818 A
- US 4877906 A
- EP 385619 A
- US 3538043 A
- US 4500704 A
- US 5032671 A
- US 6646100 A
- EP 222453 A
- WO 2008013731 A

**In der Beschreibung aufgeführte Nicht-Patentliteratur**

- **IONESCU et al.** *Advances in Urethane Science & Technology,* 1998, vol. 14, 151-218
- **M. IONESCU et al.** *Advances in Urethanes Science and Technology,* 1998, vol. 14, 151-218
- Ullmann's Encyclopedia of Industrial Chemistry. 1992, vol. B4, 167ff
- Handbuch Apparate. Vulkan-Verlag Essen, 1990, 188-208